# EUROPEAN PATENT APPLICATION

(11) **EP 2 796 518 A1**
(43) Date of publication of application: **29.10.2014**
(21) Application number: 14156967.3
(22) Date of filing: 27.02.2014
(51) Int. Cl.: C09D 11/00

(54) **Process for producing decorative sheet, decorative sheet, decorative sheet molded product, process for producing in-mold molded article, and in-mold molded article**

(30) Priority: 04.03.2013 JP 2013041555
(71) Applicant: Fujifilm Corporation, Minato-ku Tokyo (JP)
(72) Inventor: Makuta, Toshiyuki, Kanagawa (JP)
(74) Representative: HOFFMANN EITLE

(57) **Abstract**

Disclosed is a process for producing a decorative sheet, the process comprising a discharge step of discharging an ink composition onto a recording medium, a drying step of drying the ink composition above the recording medium by means of heat, and a curing step of curing the ink composition above the recording medium by means of a light source having a peak wavelength of 200 nm to 300 nm, the ink composition comprising (Component A) a polymer compound comprising a monomer unit (a-1) having a partial structure represented by Formula (1) below and a monomer unit (a-2) having a hydrophilic group, (Component B) water, and (Component C) a pigment.

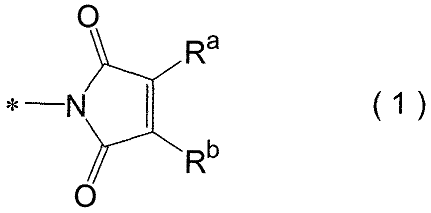

## Description

The present invention relates to a process for producing a decorative sheet, a decorative sheet, a decorative sheet molded product, a process for producing an in-mold molded article, and an in-mold molded article.

The so-called three-dimensional molding in which a sheet is subjected to printing and then heated and molded into a three-dimensional shape using a mold is used in many fields, including dummy cans displayed in vending machines, novelties, amusement machines, membrane switch surface panels, and interior trim for automotive mass production. Currently, printing of such a sheet is mainly carried out using screen printing, and due to the demand for a reduction in the storage space for original plates (changing to electronic data) there is a need for digital printing to be employed for the printing of three-dimensional moldings.

As digital printing methods, there are an electrophotographic method, sublimation type and melt type thermal transfer methods, an inkjet method, etc. The electrophotographic method requires a process of forming an electrostatic latent image on a photosensitive drum by electric charging and exposure to light and has the problem that the system becomes complicated, thus resulting in high production costs, etc. With regard to the thermal transfer method, although the equipment is inexpensive, due to the use of an ink ribbon the running costs are high and there is the problem of waste material being generated.

On the other hand, the inkjet method employs inexpensive equipment, and since image formation is carried out directly above a recording medium by discharging an ink only onto a required image area, the ink composition can be used efficiently, and the running costs are low. Furthermore, noise is low, and it is excellent as an image recording method.

With regard to inks used in the inkjet method, there are aqueous inks, oil-based inks, and UV (ultraviolet) curing type inks. In three-dimensional molding, printing is mainly carried out on a rigid plastic sheet. JP-A-2004-025844 (JP-A denotes a Japanese unexamined patent application publication), JP-A-2006-328297, JP-A-2007-021832, and JP-A-2008-087246 disclose three-dimensional molding methods employing a UV curing type ink. On the other hand, in the field of aqueous inks a so-called latex ink, which contains a latex and can be applied to a plastic substrate, has been recently developed and is described in published Japanese translation 2003-515787 of a PCT application.

As described above, printing on a sheet is currently carried out mainly by screen printing, but this type of analog printing has the problems that it is difficult to provide full color or gradations, it requires two or more proofing operations for pattern matching with a mold, and it is therefore difficult to shorten the lead time.

Furthermore, even when the inkjet method is employed, it is difficult to carry out printing on a plastic with an aqueous ink. Although an oil-based ink can be used for printing on a specific plastic such as a vinyl chloride substrate, there is the problem that it spreads on a plastic substrate such as a polycarbonate or the like, which is very frequently used in three-dimensional molding, and a good quality image cannot be formed. On the other hand, UV inks can be used with a wide variety of substrates and in printing methods suitable for three-dimensional moldings.

UV inks described in JP-A-2004-025844, JP-A-2006-328297, JP-A-2007-021832, and JP-A-2008-087246 are inks for which the entire vehicle (polymerizable compound) is cured above a substrate; the image layer has a larger film thickness than that of other inks, and it is therefore very difficult to achieve a balance between stretchability and film strength. In particular, when a high density and a high stretching ratio of at least 250% are required, it is difficult to secure a sufficient film strength (tack-free properties, resistance to cracking, etc.).

On the other hand, since the aqueous latex ink described in published Japanese translation 2003-515787 of a PCT application is a system in which moisture is dried, it is possible to form a thin film, and the system is advantageous in terms of achieving a balance between stretchability and film strength. However, in order to obtain sufficient film strength it is necessary to subject the latex ink to thermal fixation (thermal fusion-bonding of latex), and thermal fixation is carried out using a heated roller. In this fixation method, heating is also carried out from underneath the substrate; a rigid substrate cannot be heated sufficiently, and thermal fixation becomes inadequate. Furthermore, in a method in which a UV ink is used in an aqueous system, it is possible to carry out curing only after water has been removed by a method such as evaporation, and there is the problem of image disturbance occurring during the time before the water is removed.

Under such circumstances, there has been a desire for a system in which high stretchability, high film strength, and high image quality can all be satisfied when a rigid substrate is used.

It is an object of the present invention to provide a process for producing a decorative sheet having an image with high stretchability, high film strength, and high image quality. It is also an object of the present invention to provide a decorative sheet obtained by the production process, a decorative sheet molded product employing the decorative sheet, a process for producing an in-mold molded article, and an in-mold molded article.

The objects of the present invention have been attained by <1>, <22>, <23>, <25>, and <26> below. They are listed together with <2> to <21>, and <24>, which are preferred embodiments.
<1> A process for producing a decorative sheet, the process comprising, a discharge step of discharging an ink composition onto a recording medium, a drying step of drying the ink composition above the recording medium by means of heat, and a curing step of curing the ink composition above the recording medium by means of a light source having a peak wavelength of 200 nm to 300 nm, the ink composition comprising (Component A) a polymer compound comprising a monomer unit (a-1) having a partial structure represented by Formula (1) below and a monomer unit (a-2) having a hydrophilic group, (Component B) water, and (Component C) a pigment 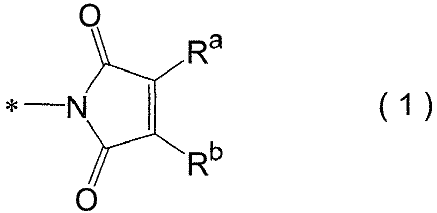 wherein in Formula (1), R^{a} and R^{b} mutually independently denote a hydrogen atom or an alkyl group having 1 to 4 carbon atoms, at least one of R^{a} and R^{b} denotes an alkyl group having 1 to 4 carbon atoms, and R^{a} and R^{b} may be bonded to each other to form a 4- to 6-membered alicyclic structure,
<2> the process for producing a decorative sheet according to <1>, wherein the recording medium has a thickness of at least 300 µm but no greater than 10 mm,
<3> the process for producing a decorative sheet according to <1> or <2>, wherein the light source is a germicidal lamp,
<4> the process for producing a decorative sheet according to any one of <1> to <3>, wherein Component A further comprises a hydrophobic monomer unit (a-3) other than the monomer unit (a-1) having a partial structure represented by Formula (1) above,
<5> the process for producing a decorative sheet according to <4>, wherein the hydrophobic monomer unit (a-3) is a monomer unit derived from an alkyl (meth)acrylate having 4 to 22 carbon atoms,
<6> the process for producing a decorative sheet according to <4> or <5>, wherein the hydrophobic monomer unit (a-3) has a content of 5 to 72 mass% relative to the total mass of the polymer compounds (preferably 20 to 65 mass%, and more preferably 25 to 60 mass%),
<7> the process for producing a decorative sheet according to any one of <1> to <6>, wherein the monomer unit (a-1) having a partial structure represented by Formula (1) is a monomer unit represented by Formula (2) below 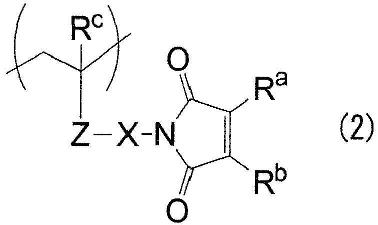 wherein in Formula (2), R^{a} and R^{b} mutually independently denote a hydrogen atom or an alkyl group having 1 to 4 carbon atoms, at least one of R^{a} and R^{b} denotes an alkyl group having 1 to 4 carbon atoms, R^{a} and R^{b} may be bonded to each other to form a 4- to 6-membered alicyclic structure, R^{c} denotes a hydrogen atom or a methyl group, Z denotes a single bond, -COO-**, or - CONR^{d}-**, R^{d} denotes a hydrogen atom or an alkyl group having 1 to 4 carbon atoms, ** denotes the position of bonding to X, and X denotes a divalent organic group,
<8> the process for producing a decorative sheet according to anny one of <1> to <7>, wherein the monomer unit (a-2) having a hydrophilic group is a monomer unit having at least one type of hydrophilic group selected from an alcoholic hydroxy group, an alkyl-substituted carbamoyl group, a carboxyl group, a sulfo group, and a salt thereof,
<9> the process for producing a decorative sheet according to any one of <1> to <8>, wherein the monomer unit (a-2) having a hydrophilic group is a monomer unit having at least one type of hydrophilic group selected from a carboxyl group and a salt thereof,
<10> the process for producing a decorative sheet according to any one of <1> to <9>, wherein Component A has a solubility parameter in an unneutralized state of 20.7 MPa^{1/2} to 23.0 MPa^{1/2},
<11> the process for producing a decorative sheet according to any one of <1> to <10>, wherein Component A has a solubility parameter in an unneutralized state of 21.5 MPa^{1/2} to 22.5 MPa^{1/2},
<12> the process for producing a decorative sheet according to any one of <1> to <11>, wherein the monomer unit (a-2) having a hydrophilic group is derived from a monomer selected from (meth)acrylic acid and a salt thereof,
<13> the process for producing a decorative sheet according to any one of <1> to <12>, wherein the monomer unit (a-1) having a partial structure represented by Formula (1) has a content of 20 to 70 mass% relative to the total mass of the polymer compounds (preferably 30 to 70 mass%, and more preferably 40 to 60 mass%),
<14> the process for producing a decorative sheet according to any one of <1> to <13>, wherein the monomer unit (a-2) having a hydrophilic group has a content of 8 to 25 mass% relative to the total mass of the polymer compounds (preferably 10 to 23 mass%, and more preferably 10 to 20 mass%),
<15> the process for producing a decorative sheet according to any one of <1> to <14>, wherein Component A has a content of 1 to 40 mass% of the entire ink composition (preferably 2 to 30 mass%, and more preferably 3 to 20 mass%),
<16> the process for producing a decorative sheet according to any one of <1> to <15>, wherein Component B has a content of 10 to 97 mass% of the entire ink composition (preferably 30 to 95 mass%, and more preferably 50 to 85 mass%),
<17> the process for producing a decorative sheet according to any one of <1> to <16>, wherein Component C has a content of 0.5 to 10 mass% of the entire ink composition (preferably 0.5 to 5 mass%),
<18> the process for producing a decorative sheet according to any one of <1> to <17>, wherein the ink composition further comprises a water-soluble organic solvent,
<19> the process for producing a decorative sheet according to <18>, wherein the water-soluble organic solvent comprises a water-soluble organic solvent having a boiling point at normal pressure of at least 120°C,
<20> the process for producing a decorative sheet according to any one of <1> to <19>, wherein the ink composition has a polymerization initiator content of no greater than 5 mass% (preferably no greater than 3 mass%, more preferably no greater than 1 mass%, and yet more preferably 0 mass%),
<21> the process for producing a decorative sheet according to any one of <1> to <20>, wherein the content of radically polymerizable compound and cationically polymerizable compound in the ink composition is no greater than 5 mass% (preferably no greater than 3 mass%, more preferably no greater than 1 mass%, and yet more preferably 0 mass%),
<22> a decorative sheet obtained by the production process according to any one of <1> to <21>,
<23> a decorative sheet molded product obtained by subjecting the decorative sheet according to <22> to vacuum forming, pressure forming, or vacuum/pressure forming,
<24> the decorative sheet molded product according to <23>, wherein it is further subjected to hole making after the vacuum forming, pressure forming, or vacuum/pressure forming,
<25> a process for producing an in-mold molded article, the process comprising a step of placing the decorative sheet according to <22> or the decorative sheet molded product according to <23> or <24> on an inner wall of a cavity part formed by means of a plurality of molds, and a step of injecting a molten resin into the cavity part via a gate, and
<26> an in-mold molded article obtained by the production process according to <25>.

In accordance with the present invention, there can be provided a process for producing a decorative sheet having an image with high stretchability, high film strength, and high image quality. Furthermore, there can be provided a decorative sheet obtained by the production process, a decorative sheet molded product employing the decorative sheet, a process for producing an in-mold molded article, and an in-mold molded article.

A process for producing a decorative sheet of the present invention comprises a discharge step of discharging an ink composition onto a recording medium, a drying step of drying the ink composition above the recording medium by means of heat, and a curing step of curing the ink composition above the recording medium by means of a light source having a peak wavelength of 200 nm to 300 nm, wherein the ink composition (hereinafter also called 'the ink composition of the present invention') comprising (Component A) a polymer compound comprising a monomer unit (a-1) having a partial structure represented by Formula (1) and a monomer unit (a-2) having a hydrophilic group, (Component B) water, and (Component C) a pigment.

In the present invention, the notation 'A to B', which expresses a numerical range, means 'at least A but no greater than B' (here, A < B), or 'no greater than A but at least the B' (here, A > B). That is, they are numerical ranges that include the upper limit and the lower limit. Furthermore, '(Component B) water' etc. are simply called 'Component B' etc.

In addition, 'mass%' and 'parts by mass' have the same meanings as 'wt%' and 'parts by weight' respectively. In the present invention, the term '(meth)acrylate' is occasionally used to mean both or either of 'acrylate' and 'methacrylate', and the term '(meth)acryl' is occasionally used to mean both or either of 'acryl' and 'methacryl'. Similarly, the term '(meth)acrylamide' is occasionally used to mean both or either of 'acrylamide' and 'methacrylamide'.

Furthermore, in some of the chemical structures in the present invention, a hydrocarbon chain is expressed by a simplified structural formula in which symbols for carbon (C) and hydrogen (H) are omitted.

In the present invention, a combination of preferred embodiments is more preferable.

The ink composition of the present invention is explained below, then the process for producing a decorative sheet is explained.

### 1. Ink composition

The ink composition of the present invention comprises (Component A) a polymer compound comprising a monomer unit (a-1) having a partial structure represented by Formula (1) and a monomer unit (a-2) having a hydrophilic group, (Component B) water, and (Component C) a pigment.

The ink composition of the present invention is a curable ink composition by light having a wavelength of 200 nm to 300 nm.

An ink composition applied to a printing sheet (decorative sheet) that is to be subjected to molding is required to have high level of cured film flexibility due to an ink film being stretched during molding. Moreover, it is required to have a cured film strength that can withstand molding. Furthermore, an image might stick to the mold during molding, thus causing an image defect.

An ink film (image) obtained using a conventional ink composition is inadequate in terms of film strength and has the problems that during molding scratching or white spots occur in an image, it sticks to the mold, or it cannot withstand stretching thus causing cracking or detachment from the substrate. Moreover, with a conventional aqueous ink it is difficult to obtain an image with high image quality due to color mingling, etc.

Furthermore, in recent years, insert molding has been carried out in which a decorative sheet molded article is placed in a cavity of a mold, and a molten resin is injected to thus fusion-bond and integrate the decorative sheet molded article and a resin molding made of the molten resin. In such a use, when an image layer is formed on the surface on the molten resin side, there is the problem that ink of the image layer flows due to injection of the molten resin. On the other hand, when a resin molding made of a molten resin is fusion-bonded to the substrate side (non-image formation face), there is the problem that the image sticks to the mold.

Suppressing the sticking to a mold described above is a problem characteristic of molding, and properties that prevent sticking to a mold even at high temperature are required. Furthermore, resistance to ink flow is a problem characteristic of in-mold molding.

As a result of an intensive investigation by the present inventors, it has been found that the problems can be solved by the use of an aqueous ink composition comprising Component A to Component C, and the present invention has thus been accomplished.

Although the mechanism is not clear, it is surmised that due to Component A and Component B being contained and a drying step being carried out, an image having a relatively small film thickness is obtained, thus giving excellent stretchability. Furthermore, it is surmised that due to Component A being contained, a decorative sheet having an image with excellent cured film strength and high image quality is obtained. The ink composition of the present invention quickly increases in viscosity as a result of a solvent including water being removed in the drying step. Because of this, compared with a conventional aqueous ink, the occurrence of an image disturbance such as color mingling is suppressed.

### (Component A) Polymer compound comprising a monomer unit (a-1) having a partial structure represented by Formula (1) and a monomer unit (a-2) having a hydrophilic group

The ink composition of the present invention comprises (Component A) a polymer compound comprising a monomer unit (a-1) having a partial structure represented by Formula (1) below and a monomer unit (a-2) having a hydrophilic group (hereinafter also called a 'specific copolymer').

Each of the monomer units contained in the specific copolymer and the physical properties of the specific copolymer contained in the ink composition of the present invention are now explained in detail.

### Monomer unit (a-1) having partial structure represented by Formula (1)

The specific copolymer comprises a monomer unit (a-1) having a partial structure represented by Formula (1). 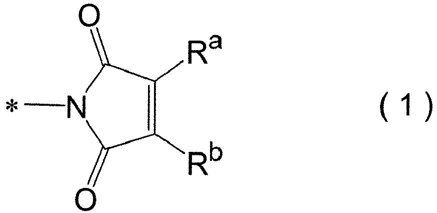 (In Formula (1), R^{a} and R^{b} mutually independently denote a hydrogen atom or an alkyl group having 1 to 4 carbon atoms, at least one of R^{a} and R^{b} denotes an alkyl group having 1 to 4 carbon atoms, and R^{a} and R^{b} may be bonded to each other to form a 4- to 6-membered alicyclic structure.)

In Formula (1), an alkyl group having 1 to 4 carbon atoms denoted by R^{a} or R^{b} may have a linear structure or a branched structure. Specific examples thereof include a methyl group, an ethyl group, a propyl group, an isopropyl group, a butyl group, an isobutyl group, a *sec*-butyl group and a *t*-butyl group. Among these alkyl groups, an alkyl group having 1 or 2 carbon atoms (i.e., a methyl group or an ethyl group) is preferable, and an alkyl group having 1 carbon atom (i. e., a methyl group) is particularly preferable.

In Formula (1), an alkyl group denoted by R^{a} or R^{b} may have a substituent or may not have a substituent, but the alkyl group not having a substituent is preferable.

R^{a} and R^{b} may be bound to each other to form a 4- to 6-membered alicyclic structure.

In Formula (1), at least one of R^{a} and R^{b} denotes an alkyl group having 1 to 4 carbon atoms. When both of R^{a} and R^{b} denote hydrogen atoms, the reactivity and the stability are poor.

With regard to R^{a} and R^{b}, it is preferable for both thereof to be alkyl groups having 1 to 4 carbon atoms or for R^{a} and R^{b} to be bonded to form a 4-to 6-membered alicyclic structure, it is more preferable for both R^{a} and R^{b} to be alkyl groups having 1 or 2 carbon atoms, and it is yet more preferable for both R^{a} and R^{b} to be alkyl groups having one carbon atom (methyl groups).

Specific examples of the partial structure represented by Formula (1) are shown below. However, the present invention is not limited thereto.

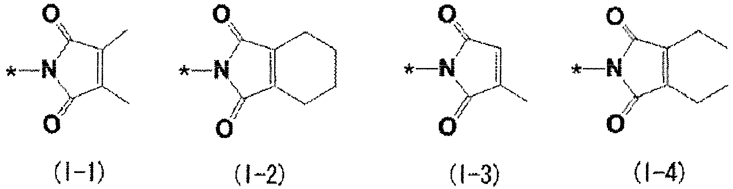

The specific copolymer may have a plurality of partial structures represented by Formula (1) in a side chain.

The monomer unit (a-1) having a partial structure represented by Formula (1) is preferably a monomer unit represented by Formula (2) below.

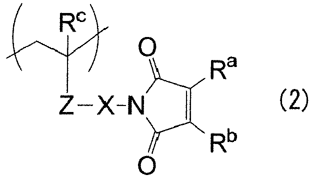

In Formula (2), R^{a} and R^{b} mutually independently denote a hydrogen atom or an alkyl group having 1 to 4 carbon atoms, at least one of R^{a} and R^{b} denotes an alkyl group having 1 to 4 carbon atoms, R^{a} and R^{b} may be bonded to each other to form a 4- to 6-membered alicyclic structure, R^{c} denotes a hydrogen atom or a methyl group, Z denotes a single bond, -COO-**, or - CONR^{d}-**, R^{d} denotes a hydrogen atom or an alkyl group having 1 to 4 carbon atoms, ** denotes the position of bonding to X, and X denotes a divalent organic group.

In Formula (2), R^{a} and R^{b} mutually independently denote a hydrogen atom or an alkyl group having 1 to 4 carbon atoms. R^{a} and R^{b} may be bonded to each other to form a 4- to 6-membered alicyclic structure.

R^{a} and R^{b} in Formula (2) have the same meanings as those of R^{a} and R^{b} in Formula (1), and preferred ranges are also the same.

In Formula (2), R^{c} denotes a hydrogen atom or a methyl group. R^{c} is preferably a methyl group.

In Formula (2), Z denotes a single bond, -COO-**, or -CONR^{d}-**, R^{d} denotes a hydrogen atom or an alkyl group having 1 to 4 carbon atoms, ** denotes the position of bonding to X, and X denotes a divalent organic group. Z is preferably -COO-**.

R^{d} in -CONR^{d}-** above denotes a hydrogen atom or an alkyl group having 1 to 4 carbon atoms. The alkyl group having 1 to 4 carbon atoms denoted by R^{d} may have a linear structure or a branched structure. Specific examples thereof include a methyl group, an ethyl group, a propyl group, an isopropyl group, a butyl group, an isobutyl group, a sec-butyl group and a t-butyl group. R^{d} is preferably a hydrogen atom or an alkyl group having 1 or 2 carbon atoms, that is, a methyl group or an ethyl group, and it is particularly preferable that R^{d} is a hydrogen atom. When R^{d} denotes an alkyl group, the alkyl group may have a substituent or may not have a substituent, but the alkyl group not having a substituent is preferable.

In Formula (2), X denotes a divalent organic group. Examples of the divalent organic group includes an alkylene group and an aralkylene group, and an alkylene group having 2 to 20 carbon atoms and an aralkylene group having 6 to 12 carbon atoms are preferable. X is more preferably an alkylene group.

When X denotes an alkylene group, the alkylene group preferably has 2 to 20 carbon atoms, more preferably has 2 to 12 carbon atoms, and yet more preferably has 2 to 8 carbon atoms. When the number of carbon atoms of the alkylene group denoted by X is in this range, the mobility of a partial structure represented by Formula (1) at a side chain terminal of a specific copolymer improves, and the effect of the present invention improves.

The alkylene group denoted by X may be one having a straight-chain structure, one having a branch in an alkylene chain, or one having a cyclic structure. Furthermore, the alkylene group may comprise a bond selected from -O-, -COO-, -OC(=O)-, and -CONH- in the alkylene chain. The alkylene group may also be substituted with an alkyl group having no greater than 4 carbon atoms, a hydroxy group, or a chlorine atom.

In Formula (2), it is preferably that R^{a} and R^{b} each independently denote an alkyl group having 1 or 2 carbon atoms, R^{c} denotes a methyl group, Z denotes -COO-**, and X denotes an alkylene group having 2 to 12 carbon atoms.

The content of the monomer unit (a-1) having a partial structure represented by Formula (1) (preferably the monomer unit represented by Formula (2)) in the specific copolymer may be selected appropriately according to the intended properties of a cured film (image) formed from the ink composition. The content of the monomer unit (a-1) having a partial structure represented by Formula (1) is preferably 20 to 70 mass%, more preferably 30 to 70 mass%, and yet more preferably 40 to 60 mass% from the viewpoint of the strength and flexibility of an image formed.

It is preferable for the content of the monomer unit (a-1) having a partial structure represented by Formula (1) to be in this range since the image strength is excellent. When forming an image having excellent flexibility, the lower the content is in the above range the better.

The specific copolymer may comprise only one type of monomer unit (a-1) having a partial structure represented by Formula (1), or two or more types thereof.

The monomer unit (a-1) having a partial structure represented by Formula (1) may be introduced into a specific copolymer by copolymerization using a monomer having a partial structure represented by Formula (1) as one of the copolymerization components. When the monomer unit (a-1) having a partial structure represented by Formula (1) is a monomer unit represented by Formula (2), a monomer represented by Formula (2') below may be used for synthesis of the specific copolymer.

Furthermore, the partial structure represented by Formula (1) may be introduced by a method employing a polymer reaction. Examples of such a method include a method in which a corresponding anhydride is reacted with a prepolymer having a primary amino group and a method in which a compound having a partial structure represented by Formula (1) and a functional group that reacts with a functional group in a prepolymer to form a bond is reacted with the prepolymer.

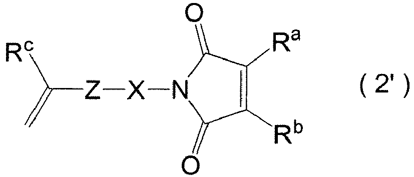

In Formula (2'), R^{a} R^{b}, R^{c}, Z and X have the same meanings as those of R^{a} ,R^{b}, R^{c}, Z and X in Formula (2), respectively, and preferred ranges are also the same.

Preferred examples of the monomer represented by Formula (2') include following monomers (2'-1) to (2'-11). However the present invention is not limited thereto.

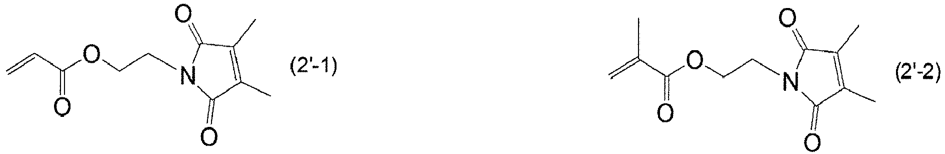

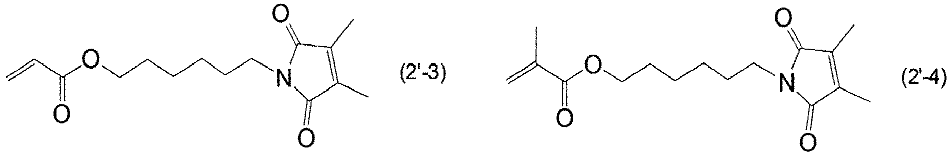

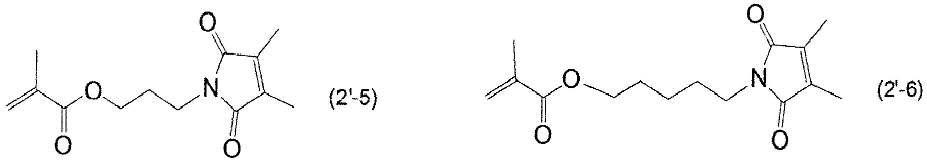

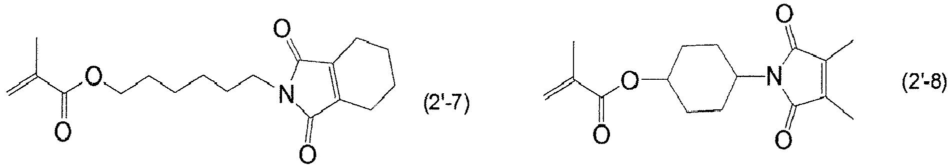

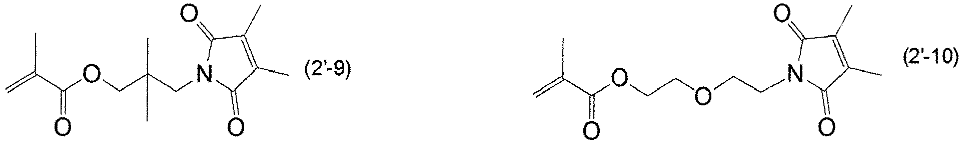

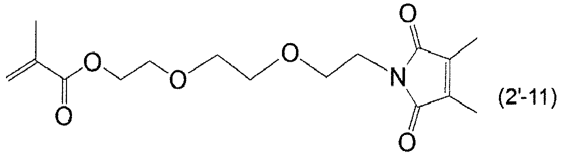

The monomer comprising a partial structure represented by Formula (1), whose representative examples are monomers (2'-1) to (2'-11), may be produced by reference to methods described in for example JP-A-52-988, JP-A-4-251258, etc.

### Monomer unit (a-2) having hydrophilic group

In the present invention, the specific copolymer comprises a monomer unit (a-2) having a hydrophilic group (hereinafter, also called a 'monomer unit (a-2)'). The hydrophilic monomer unit of course means a monomer unit other than the monomer unit (a-1) having a partial structure represented by Formula (1).

The hydrophilic group is not limited, and may be any of a nonionic hydrophilic group or an ionic hydrophilic group such as an anionic hydrophilic group or a cationic hydrophilic group as long as the group serves to enhance the hydrophilicity of the specific copolymer.

The nonionic hydrophilic group is not particularly limited, and examples thereof include nonionic hydrophilic groups such as a carbamoyl group, an alkyl-substituted carbamoyl group, an alcoholic hydroxy group, and a group having a polyalkyleneoxy structure.

Examples of the alkyl-substituted carbamoyl group include a monoalkylcarbamoyl group in which a hydrogen atom bonded to the nitrogen atom of a carbamoyl group (-C(=O)-NH₂) is replaced by an alkyl group and a dialkylcarbamoyl group in which two hydrogen atoms bonded to the nitrogen atom of a carbamoyl group are replaced by alkyl groups. The alkyl group may further be optionally substituted with a hydroxy group, etc. Among these alkyl-substituted carbamoyl groups, a monoalkyl carbamoyl group substituted with an alkyl group having 1 to 8 carbon atoms or an alkyl group having 1 to 4 carbon atoms that is substituted with a hydroxy group is preferable.

The group having a polyalkyleneoxy structure is not particularly limited, but is preferably a polyalkyleneoxy structure having an alkyleneoxy group having 1 to 4 carbon atoms in a monomer unit, and is more preferably a polyalkyleneoxy structure in which an alkyleneoxy group is repeated four or more times. With regard to the alkyleneoxy group in the polyalkyleneoxy structure, one type may be present or a plurality of types of alkyleneoxy groups may be present in combination. The terminal group of the polyalkyleneoxy structure is preferably a hydroxy group or an alkoxy group, and more preferably a hydroxy group or a methoxy group.

The ionic hydrophilic group is not particularly limited; examples thereof include ionic hydrophilic groups such as a carboxyl group, a sulfo group, a phosphoric acid group, a phosphonic acid group, a phenolic hydroxy group, and a quaternary ammonium group. The ionic hydrophilic group may form a salt.

When the ionic hydrophilic group forms a salt, examples of the counter ion include an alkali metal ion (Li⁺, Na⁺, K⁺, etc.) and an onium ion such as an ammonium ion, a pyridinium ion, or a phosphonium ion. Among them, an alkali metal ion (Li⁺, Na⁺, K⁺, etc.) or an ammonium ion is preferable.

Among these hydrophilic groups, a carbamoyl group, an alkyl-substituted carbamoyl group, an alcoholic hydroxy group, a group having a polyalkyleneoxy structure, a carboxyl group, a sulfo group, and a salt thereof are preferable, and an alcoholic hydroxy group, an alkyl-substituted carbamoyl group, a carboxyl group, a sulfo group, and a salt thereof are more preferable.

Furthermore, a carboxyl group and a salt thereof are yet more preferable.

The monomer unit (a-2) having a hydrophilic group is preferably a monomer unit represented by Formula (3) below.

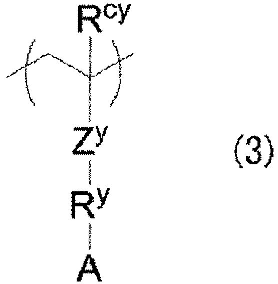

In Formula (3), R^{cy} denotes a hydrogen atom or a methyl group. Z^{y} denotes - COO-***, -CONR^{dy}-***, or a single bond, R^{dy} denotes a hydrogen atom or an alkyl group having 1 to 4 carbon atoms. R^{y} denotes a single bond, an alkylene group, an arylene group, or an aralkylene group. A denotes a hydrophilic group. *** denotes the position of Z^{y} bonding to R^{y}.

Formula (3) is explained in detail below.

In Formula (3), R^{cy} denotes a hydrogen atom or a methyl group.

In Formula (3), Z^{y} denotes -COO-**, -CONR^{dy}-***, or a single bond, and preferably -COO-***. *** denotes the position of Z^{y} bonding to R^{y}.

R^{dy} denotes a hydrogen atom or an alkyl group having 1 to 4 carbon atoms. The alkyl group having 1 to 4 carbon atoms may have a straight-chain structure or a branched structure. Specific examples include a methyl group, an ethyl group, a propyl group, an isopropyl group, a butyl group, an isobutyl group, a sec-butyl group, and a t-butyl group. R^{dy} is preferably a hydrogen atom or an alkyl group having 1 or 2 carbon atoms (i.e., a methyl group or an ethyl group), and particularly preferably a hydrogen atom.

R^{dy} may have a substituent or may not have a substituent, but the alkyl group not having a substituent is preferable. Examples of the substituent that R^{dy} may have include an aryl group having 6 to 8 carbon atoms, an alkoxy group having 1 to 8 carbon atoms, a hydroxy group, a carboxy group, and a halogen atom such as F, Cl, Br or I.

In Formula (3), R^{y} denotes a single bond, an alkylene group, an arylene group, or an aralkylene group, and is preferably an alkylene group having 1 to 20 carbon atoms, an arylene group having 6 to 20 carbon atoms, or an aralkylene group having 7 to 20 carbon atoms.

When R^{y} denotes an alkylene group, an arylene group, or an aralkylene group, these groups may have a substituent or may not have a substitutent. Examples of the substituent include an aryl group having 6 to 8 carbon atoms, an alkoxy group having 1 to 8 carbon atoms, a hydroxy group, a carboxy group, and a halogen atom such as F, Cl, Br, or I. Furthermore, the alkylene group, arylene group and aralkylene group denoted by Ry may contain an ether bond, a carbonyl group (-C(=O)-), an ester bond, an amide bond, or a urethane bond in its structure.

In Formula (3), R^{y} is preferably a single bond.

When R^{y} is an alkylene group having 1 to 20 carbon atoms, the alkylene group may have a straight-chain structure, a branched structure, or a cyclic structure. The number of carbon atoms of the alkylene group denoted by R^{y} is more preferably 2 to 12, and yet more preferably 2 to 8. Specific examples of the alkylene group denoted by R^{y} include -CH₂-, -C₂H₄-, -C(CH₃)₂-CH₂-, -CH₂C(CH₃)₂CH₂-, -C₆H₁₂-, - C₄H₇(C₄H₉)C₄H₈-, C₁₈H₃₆-, an 1,4-trans-cyclohexylene group, -C₂H₄-OCO-C₂H₄-, -C₂H₄-OCO-, -C₂H₄-O-C₅H₁₀-, -CH₂-O-C₅H₉(C₅H₁₁)-, -C₂H₄-CONH-C₂H₄-, - C₄H₈-OCONH-C₆H₁₂-, -CH₂-OCONHC₁₀H₂₀-, and -CH₂CH(OH)CH₂-.

When R^{y} is an arylene group having 6 to 20 carbon atoms, the number of carbon atoms of the arylene group is more preferably 6 to 18, yet more preferably 6 to 14, and particularly preferably 6 to 10. Specific examples of the arylene group denoted by R^{y} include a phenylene group, a biphenylene group, -C₆H₄-CO-C₆H₄-, and a naphthylene group.

When R^{y} is an aralkylene group having 7 to 20 carbon atoms, the number of carbon atoms of the aralkylene group is more preferably 7 to 18, yet more preferably 7 to 14, and particularly preferably 7 to 10. Specific examples of the aralkylene group denoted by R^{y} include -C₃H₆-C₆H₄-, -C₂H₄-C₆H₄-C₆H₄-, - CH₂-C₆H₄-C₆H₄-C₂H₄-, and -C₂H₄-OCO-C₆H₄-.

Examples of hydrophilic groups denoted by A in Formula (3) include the hydrophilic groups described above, and preferred ranges are also the same.

When the specific copolymer has a monomer unit represented by Formula (3), the content of the monomer unit represented by Formula (3) in the specific copolymer is as follows.

When the hydrophilic group A in Formula (3) is an ionic hydrophilic group, the content of the monomer unit represented by Formula (3) is preferably 5 mass% to 50 mass% of the specific copolymer, more preferably 5 mass% to 40 mass%, and particularly preferably 5 mass% to 20 mass%.

When hydrophilic group A in Formula (3) is a nonionic hydrophilic group, it is preferably 20 mass% to 95 mass% of the specific copolymer, more preferably 30 mass% to 80 mass%, and yet more preferably 30 mass% to 70 mass%.

The monomer unit represented by Formula (3) is preferably derived from a monomer represented by Formula (3') below. Due to these monomers being contained as a copolymerization component, the monomer unit (a-2) is introduced into the specific copolymer.

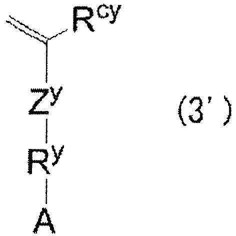

R^{cy}, Z^{y}, R^{y} and A in Formula (3') have the same meanings as those of R^{cy}, Z^{y}, R^{y} and A in Formula (3), respectively, and preferred ranges are also the same.

Preferred examples of monomers represented by Formula (3') include the monomer compounds listed below, but the present invention should not be construed as being limited thereto.

Specific examples include methoxypolyethylene glycol (meth)acrylate, polyethylene glycol (meth)acrylate, polypropylene glycol (meth)acrylate, poly(ethylene glycol-co-propylene glycol) (meth)acrylate, 2-hydroxyethyl (meth)acrylate, glycerol (meth)acrylate, (meth)acryloyloxyethyl ethylene urea, vinylpyrrolidone, 3-(meth)acryloyloxy-γ-butyrolactone, (meth)acrylamide, *tert-*butyl(meth)acrylamide, *N,N*-dimethyl(meth)acrylamide, diacetone (meth)acrylamide, (meth)acrylic acid, sodium (meth)acrylate, potassium (meth)acrylate, tetrabutylammonium (meth)acrylate, mono(meth)acryloyloxyethylsuccinic acid, sodium mono(meth)acryloyloxyethylsuccinate, sodium mono(meth)acryloyloxyethylphthalate, (meth)acryloyloxyethyl acid phosphate, sodium 2-(meth)acrylamido-2-methylpropanesulfonate, 2-(meth)acrylamido-2-methylpropanesulfonic acid, styrenesulfonic acid, sodium styrenesulfonate, and vinylbenzoic acid.

As the monomer represented by Formula (3'), a commercial compound may be used as well as one produced by a generally known common method.

Furthermore, in the present invention, other than the monomer represented by Formula (3'), an unsaturated dicarboxylic acid or an anhydride thereof such as maleic acid, maleic anhydride, or fumaric acid, or a dicarboxylate derived therefrom may also be preferably used.

Among them, the monomer unit (a-2) having a hydrophilic group is preferably a monomer unit derived from (meth)acrylic acid or a salt thereof, more preferably a monomer unit derived from (meth)acrylic acid, and particularly preferably a monomer unit derived from methacrylic acid.

A preferred content of the monomer unit having a hydrophilic group in the specific copolymer depends on the type of hydrophilic group, but it is preferably a content that makes the specific copolymer water-soluble.

The specific copolymer exhibiting water-solubility referred to here means that the specific copolymer dissolves to the extent of at least 3 mass% in water at 25°C.

The content of the monomer unit (a-2) in the specific copolymer is preferably 8 mass% to 25 mass%, more preferably 10 mass% to 23 mass%, and yet more preferably 10 mass% to 20 mass%.

Due to the content of the monomer unit (a-2) being in this range, the polarity of the specific copolymer can be maintained appropriately, and desirable water resistance can be obtained.

The specific copolymer may comprise only one type of monomer unit (a-2) having a hydrophilic group or may comprise two or more types thereof. When the monomer unit (a-2) having a hydrophilic group has an ionic hydrophilic group, its state naturally changes according to the pH of the ink composition; for example, when a carboxyl group is contained as the hydrophilic group, the carboxyl group and a salt thereof are present at the same time depending on the pH of the ink composition.

### Hydrophobic monomer unit (a-3)

The specific copolymer preferably comprises a hydrophobic monomer unit (a-3) (hereinafter, also simply called a 'monomer unit (a-3)'). The hydrophobic monomer unit referred to here is a monomer unit other than the monomer unit (a-1) having a partial structure represented by Formula (1) and the monomer unit (a-2) having a hydrophilic group, and is a monomer unit not having a hydrophilic group.

Due to the hydrophobic monomer unit being contained, the polarity of the specific copolymer can be maintained appropriately, and an ink image formed by the ink composition has excellent water resistance as well as excellent adhesion to a non-absorbing recording medium.

With regard to the hydrophobic monomer unit (a-3), the solubility of a homopolymer formed only from the monomer unit (a-3) having a weight-average molecular weight of at least 10,000 is preferably less than 1.0 mass%.

As the hydrophobic monomer unit, a monomer unit derived from a monomer selected from a styrene, a vinyl ether, and an alkyl or aralkyl ester of (meth)acrylic acid is suitably used, and an alkyl ester of (meth)acrylic acid is more preferable.

Among them, from the viewpoint of adjusting the polarity of the specific copolymer in an appropriate range, the alkyl group of the alkyl ester preferably has 1 to 30 carbon atoms, more preferably 2 to 24 carbon atoms, and yet more preferably 3 to 18 carbon atoms. The alkyl group may be substituted or unsubstituted. Examples of the substituent include an aryl group, an aryloxy group, and an alkoxy group, and an aryl group or an alkoxy group is preferable. The alkyl group is preferably unsubstituted.

The alkyl group may be straight-chain, branched, or cyclic.

Furthermore, the hydrophobic monomer unit (a-3) may be, as described above, a monomer unit derived from an aralkyl ester or aryloxyalkyl ester of (meth)acrylic acid, the ester having a benzyl group or phenoxyethyl group, which is an alkyl group substituted with an aryl group or aryloxy group. In the case of an aralkyl ester, the number of carbon atoms of the aralkyl group is preferably 6 to 30, more preferably 6 to 24, yet more preferably 6 to 18, and particularly preferably 7 to 12. In the case of an aryloxyalkyl ester, the number of carbon atoms of the aryloxyalkyl group is preferably 6 to 30, more preferably 6 to 24, yet more preferably 6 to 18, and particularly preferably 8 to 12.

Furthermore, the total number of carbon atoms of the (meth)acrylic acid ester is preferably 4 to 22, more preferably 5 to 20, and yet more preferably 5 to 18.

The hydrophobic monomer unit (a-3) that can be contained in the specific copolymer related to the present invention is preferably a monomer unit derived from a hydrophobic monomer (a'-3), which is illustrated below. Examples of the hydrophobic monomer include (meth) acrylic esters such as methyl (meth)acrylate, ethyl (meth)acrylate, *n*-propyl (meth)acrylate, isopropyl (meth)acrylate, *n*-butyl (meth)acrylate, isobutyl (meth)acrylate, *t*-butyl (meth)acrylate, *n*-hexyl (meth)acrylate, 2-ethylhexyl (meth)acrylate, octyl (meth)acrylate, decyl (meth)acrylate, dodecyl (meth)acrylate, stearyl

(meth)acrylate, cyclohexyl (meth)acrylate, isobornyl (meth)acrylate, benzyl (meth)acrylate, phenoxyethyl (meth)acrylate, etc., styrenes such as styrene, α-methylstyrene, 4-methylstyrene, etc., vinyl ethers such as chloroethyl vinyl ether, etc. Among them, (meth)acrylic esters having a total of 4 to 22 carbon atoms, and substituted by an alkyl group such as *n*-propyl (meth)acrylate, isopropyl (meth)acrylate, *n*-butyl (meth)acrylate, isobutyl (meth)acrylate, *t*-butyl (meth)acrylate, *n*-hexyl (meth)acrylate, 2-ethylhexyl (meth)acrylate, octyl (meth)acrylate, decyl (meth)acrylate, dodecyl (meth)acrylate, stearyl (meth)acrylate, cyclohexyl (meth)acrylate are preferable. *n*-Propyl (meth)acrylate, isopropyl (meth)acrylate, n-butyl (meth)acrylate, isobutyl (meth)acrylate, *t*-butyl (meth)acrylate, *n*-hexyl (meth)acrylate, 2-ethylhexyl (meth)acrylate, octyl (meth)acrylate, cyclohexyl (meth)acrylate, isobornyl (meth)acrylate, benzyl (meth)acrylate, and phenoxyethyl (meth)acrylate are more preferable. Furthermore, *n*-butyl (meth)acrylate, isobutyl (meth)acrylate, *t*-butyl (meth)acrylate, cyclohexyl (meth)acrylate, isobornyl (meth)acrylate, 2-ethylhexyl (meth)acrylate, and phenoxyethyl (meth)acrylate are yet more preferable, and *n*-butyl (meth)acrylate, isobutyl (meth)acrylate, *t*-butyl (meth)acrylate, cyclohexyl (meth)acrylate, isobornyl (meth)acrylate are particularly preferable.

Among them, the hydrophobic monomer unit (a-3) preferably comprises a monomer unit derived from an alkyl ester of (meth)acrylic acid in which the total number of carbon atoms of the alkyl group is 1 to 30 carbon atoms, more preferably comprises a monomer unit derived from an alkyl ester of (meth)acrylic acid in which the number of carbon atoms of the alkyl group is 2 to 24 carbon atoms, yet more preferably comprises a monomer unit derived from an alkyl ester of (meth)acrylic acid in which the number of carbon atoms of the alkyl group is 3 to 18 carbon atoms, and particularly preferably comprises a monomer unit derived from an alkyl ester of (meth)acrylic acid in which the number of carbon atoms of the alkyl group is 4 to 18 carbon atoms. The alkyl group is preferably an unsubstituted alkyl group and may be any of straight-chain, branched, or cyclic, but is preferably a straight-chain or branched alkyl group. Furthermore, it is preferable for the monomer unit to be contained at at least 30 mass% of the hydrophobic monomer unit (a-3), more preferably at least 50 mass%, yet more preferably at least 65 mass%, particularly preferably at least 80 mass%, and most preferably at least 90 mass%.

The specific copolymer may comprise only one type of monomer unit (a-3) or may comprise two or more types.

From the viewpoint of decreasing the polarity of the specific copolymer, the hydrophobic monomer unit (a-3) is preferably in the range of 5 mass% to 72 mass% in the specific copolymer, more preferably 20 mass% to 65 mass%, and most preferably 25 mass% to 60 mass%.

### SP value of specific copolymer

In the present invention, the specific copolymer preferably has an SP value of 20.7 MPa^{1/2} to 23.0 MPa^{1/2}, more preferably 21.2 MPa^{1/2} to 22.8 MPa^{1/2}, and yet more preferably 21.5 MPa^{1/2} to 22.5 MPa^{1/2}.

In the present invention, the 'SP value' means 'solubility parameter value'. The SP value referred to in the present invention is a solubility parameter calculated using the Okitsu method ('Secchaku (Adhesion)' Vol. 38, No. 6, page 6 (1994), Koubunshi Kankoukai) and denotes an estimated value, proposed by Okitsu, given from a molar attraction constant and a molar volume per unit molecule structure. When calculating the SP value for a polymer, calculation is carried out on the basis of the carboxylic acid in (meth)acrylic acid being in an unneutralized state, and the SP value in the present invention employs a value obtained by this method.

SP values for representative monomer units used in the present invention are listed below. The figures inside parentheses after the monomer names are SP values with units of MPa^{1/2}.

Monomer 1 below (24.41), Monomer 2 below (23.22), Monomer 3 below (22.75), methacrylic acid (24.02), 2-hydroxyethyl methacrylate (22.89), 2-hydroxyethyl acrylamide (32.87), methyl methacrylate (19.5), *n*-butyl methacrylate (18.33), isobutyl methacrylate (17.76), *t*-butyl methacrylate (17.97), 2-ethylhexyl methacrylate (17.30), stearyl methacrylate (17.08), 2-hydroxyethyl methacrylate (22.89), tetrahydrofurfuryl methacrylate (21.29), cyclohexyl methacrylate (18.79), benzyl methacrylate (20.21), 2-phenoxyethyl methacrylate (20.23), and isobornyl methacrylate (18.09).

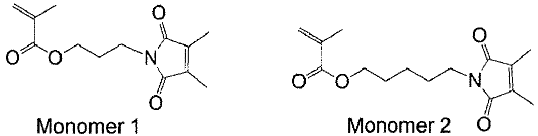

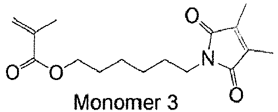

The ink composition of the present invention can form an ink image having excellent water resistance and excellent solvent resistance because it comprises a specific copolymer comprising each of the constituent units above.

When the specific copolymer uses a non-crosslinkable polymer that does not have a monomer unit (a-1) having a partial structure represented by Formula (1), it is difficult to achieve a balance between water resistance and solvent resistance by adjustment of polarity. However, since the ink composition of the present invention comprises the monomer unit (a-1) having a partial structure represented by Formula (1) in the specific copolymer, both a crosslinking effect and an insolubilization effect due to polarity can be achieved. Because of this, a balance can be achieved between the effects of water resistance and solvent resistance. Furthermore, controlling the polarity (SP value) of the specific copolymer in a specific range enables an ink composition having better adhesion to a recording medium to be obtained.

The weight-average molecular weight of the specific copolymer contained in the ink composition of the present invention is at least 5,000; it is preferably in the range of 5,000 to 150,000 from the viewpoint of water resistance, and more preferably in the range of 5,000 to 100,000 from the viewpoint of improving discharge properties.

Weight-average molecular weight may be measured by a gel permeation chromatograph (GPC). The GPC employs an HLC-8020GPC (Tosoh Corporation) and uses, as columns, a TSKgel SuperHZM-H, a TSKgel SuperHZ4000, and a TSKgel SuperHZ200 (Tosoh Corporation, 4.6 mm ID x 15 cm) and, as an eluent, THF (tetrahydrofuran), and measurement is carried out with the column oven set at a temperature of 40°C. Calculation of molecular weight employs a polystyrene standard.

Specific examples of the specific copolymer that can be used in the present invention [compound examples (A-1) to (A-24)] are shown below in the form of the starting monomers constituting the monomer units contained in the specific copolymer, their content on a mass basis, and the weight-average molecular weight of the specific copolymer obtained, but the present invention should not be construed as being limited thereto. The 'SP values' given in Table 1 below are SP values of the specific copolymers, and are values obtained by the measurement method or the calculation method described above. Further, '-' denotes that the corresponding component is not contained.

**Table 1**

| | (a-1) | | (a-2) | | | | (a-3) | | | | | | Mw | SP value (MPa^{1/2}) |
|---|---|---|---|---|---|---|---|---|---|---|---|---|---|---|
| | Name | (%) | Name | (%) | Name | (%) | Name | (%) | Name | (%) | Name | (%) | | |
| A-1 | Monomer 1 | 50 | MAA | 9 | MAA-Na | 7 | - | - | BMA | 34 | - | - | 72,300 | 22.3 |
| A-2 | Monomer 1 | 40 | MAA | 6 | MAA-Na | 6 | - | - | iBMA | 48 | - | - | 83,500 | 21.2 |
| A-3 | Monomer 1 | 50 | MAA | 9 | MAA-Na | 7 | - | - | BMA | 24 | tBMA | 10 | 79,400 | 22.2 |
| A-4 | Monomer 1 | 60 | MAA | 9 | MAA-Na | 7 | - | - | BMA | 24 | - | - | 61,500 | 22.9 |
| A-5 | Monomer 1 | 40 | MAA | 9 | MAA-Na | 7 | - | - | tBMA | 44 | - | - | 45,700 | 21.5 |
| A-6 | Monomer 1 | 60 | MAA | 9 | MAA-Na | 7 | - | - | BMA | 24 | - | - | 37,600 | 22.2 |
| A-7 | Monomer 1 | 40 | MAA | 6 | MAA-Na | 6 | HEMA | 8 | tBMA | 40 | - | - | 96,000 | 21.7 |
| A-8 | Monomer 1 | 40 | MAA | 6 | MAA-Na | 6 | HEAA | 8 | tBMA | 40 | - | - | 43,000 | 22.5 |
| A-9 | Monomer 1 | 30 | MAA | 7 | MAA-Na | 7 | - | - | tBMA | 56 | - | - | 83,000 | 20.8 |
| A-10 | Monomer 1 | 40 | MAA | 9 | MAA-Na | 7 | - | - | CyHMA | 44 | - | - | 70,100 | 21.9 |
| A-11 | Monomer 1 | 40 | MAA | 9 | MAA-Na | 7 | - | - | BMA | 20 | PEMA | 24 | 72,300 | 22.1 |
| A-12 | Monomer 1 | 50 | MAA | 9 | MAA-Na | 7 | - | - | tBMA | 24 | C18MA | 10 | 62,000 | 22.1 |
| A-13 | Monomer 1 | 20 | MAA | 9 | MAA-Na | 7 | - | - | tBMA | 40 | PEMA | 24 | 83,000 | 20.8 |
| A-14 | Monomer 1 | 70 | MAA | 6 | MAA-Na | 6 | - | - | tBMA | 18 | - | - | 73,000 | 22.9 |
| A-15 | Monomer 1 | 40 | MAA | 9 | MAA-Na | 7 | - | - | IBOMA | 44 | - | - | 51,900 | 21.6 |
| A-16 | Monomer 3 | 40 | MAA | 9 | MAA-Na | 7 | - | - | BMA | 44 | - | - | 46,000 | 21.0 |
| A-17 | Monomer 1 | 50 | MAA | 9 | MAA-Na | 7 | - | - | BMA | 24 | tBMA | 10 | 53,000 | 22.4 |
| A-18 | Monomer 1 | 50 | MAA | 9 | MAA-Na | 7 | - | - | BMA | 24 | BnMA | 10 | 71,300 | 22.5 |
| A-19 | Monomer 1 | 38 | MAA | 2 | MAA-Na | 10 | - | - | tBMA | 50 | - | - | 38,000 | 21.1 |
| A-20 | Monomer 1 | 50 | MAA | 6 | MAA-Na | 6 | - | - | tBMA | 38 | - | - | 11,500 | 21.9 |
| A-21 | Monomer 1 | 50 | MAA | 9 | MAA-Na | 7 | - | - | EHMA | 14 | tBMA | 20 | 69,800 | 22.1 |
| A-22 | Monomer 1 | 60 | MAA | 9 | MAA-Na | 7 | - | - | EHMA | 24 | - | - | 83,800 | 22.6 |
| A-23 | Monomer 1 | 60 | MAA | 4 | MAA-Na | 8 | - | - | BMA | 28 | - | - | 61,500 | 22.7 |
| A-24 | Monomer 2 | 40 | MAA | 9 | MAA-Na | 7 | - | - | BMA | 44 | - | - | 46,500 | 21.2 |

The abbreviations in Table 1 are as follows.
MAA: methacrylic acid (WAKO Pure Chemical Industries, Ltd.)
MAA-Na: methacrylic acid sodium salt (formed by neutralizing a polymer copolymerized with methacrylic acid)
BMA: n-butyl methacrylate (Wako Pure Chemical Industries, Ltd.)
iBMA: isobutyl methacrylate (Wako Pure Chemical Industries, Ltd.)
tBMA: tert-butyl methacrylate (Wako Pure Chemical Industries, Ltd.)
IBOMA: isobornyl methacrylate (Wako Pure Chemical Industries, Ltd.)
C18MA: octadecyl methacrylate (Wako Pure Chemical Industries, Ltd.)
CyHMA: cyclohexyl methacrylate (Wako Pure Chemical Industries, Ltd.)
PEMA: phenoxyethyl methacrylate (NK ester PHE-1G, Shin-Nakamura Chemical Co., Ltd.)
EHMA: 2-ethylhexyl methacrylate (Wako Pure Chemical Industries, Ltd.)
BnMA: benzyl methacrylate (Wako Pure Chemical Industries, Ltd.)

In the present invention, the specific copolymer may be obtained by polymerization of for example a monomer for forming the monomer unit (a-1) having a partial structure represented by Formula (1), a monomer for forming the monomer unit (a-2) having a hydrophilic group, and a monomer for forming the monomer unit (a-3) having a hydrophobic group by a known polymerization method, followed if necessary by neutralization of an acidic group with an alkali metal hydroxide, etc. Specifically, the specific copolymer may be produced by a method in accordance with a polymerization method described in for example JP-A-52-988, JP-A-55-154970, Langmuir Vol. 18, No. 14, pp. 5414 to 5421 (2002), etc.

In the present invention, the content of the specific copolymer is preferably 1 to 40 mass% of the entire ink composition, more preferably 2 to 30 mass%, and yet more preferably 3 to 20 mass%. It is preferable for the content to be in this range since discharge properties are excellent and an image obtained has excellent film strength and stretchability.

### (Component B) Water

The ink composition of the present invention comprises (Component B) water.

It is preferable to use as the water (Component B) ion-exchanged water or distilled water having no impurities.

The content of water in the ink composition of the present invention is preferably 10 to 97 mass%, more preferably 30 to 95 mass%, and yet more preferably 50 to 85 mass%.

It is preferable for the content of water to be in this range since discharge properties are excellent, and an image having excellent film strength and stretchability is obtained.

### (Component C) Pigment

The ink composition of the present invention comprises (Component C) a pigment. The pigment can be contained in the ink composition as a pigment dispersion. It is preferable to use the pigment dispersion from the viewpoint of solvent resistance. With regard to the pigment dispersion, a self-dispersed pigment can also be used as well as one in which the pigment is dispersed with the pigment dispersant.

With regard to the pigments, there is no particular limitation, and any generally available organic pigment and inorganic pigment, resin particles dyed with a dye, etc. may be used. Furthermore, any commercial pigments can be used, and a commercial pigment dispersion or a surface-treated pigment such as, for example, a dispersion of a pigment in an insoluble resin, etc. as a dispersion medium or a pigment having a resin grafted on the surface, etc. may be used as long as the effects of the present invention are not impaired.

Examples of these pigments include pigments described in, for example, 'Ganryo no Jiten (Pigment Dictionary)', Ed. by Seishiro Ito (2000), W. Herbst, K. Hunger, Industrial Organic Pigments, JP-A-2002-12607, JP-A-2002-188025, JP-A-2003-26978, and JP-A-2003-342503.

Specific examples of the organic pigment and the inorganic pigment that can be used in the present invention include, as those exhibiting a yellow color, monoazo pigments such as C.I. Pigment Yellow 1 (Fast Yellow G, etc.) and C.I. Pigment Yellow 74, disazo pigments such as C.I. Pigment Yellow 12 (Disazo Yellow, etc.), C.I. Pigment Yellow 17, C.I. Pigment Yellow 97, C.I. Pigment Yellow 3, C.I. Pigment Yellow 16, C.I. Pigment Yellow 83, C.I. Pigment Yellow 155, and C.I. Pigment Yellow 219, azo lake pigments such as C.I. Pigment Yellow 100 (Tartrazine Yellow Lake, etc.), condensed azo pigments such as C.I. Pigment Yellow 95 (Azo Condensation Yellow, etc.), C.I. Pigment Yellow 93, C.I. Pigment Yellow 94, C.I. Pigment Yellow 128, and C.I. Pigment Yellow 166, acidic dye lake pigments such as C.I. Pigment Yellow 115 (Quinoline Yellow Lake, etc.), basic dye lake pigments such as C.I. Pigment Yellow 18 (Thioflavine Lake, etc.), anthraquinone pigments such as C.I. Pigment Yellow 24 (Flavanthrone Yellow), isoindolinone pigments such as Isoindolinone Yellow 3RLT (Y-110), quinophthalone pigments such as C.I. Pigment Yellow 138 (Quinophthalone Yellow), isoindoline pigments such as C.I. Pigment Yellow 138 (Isoindoline Yellow), nitroso pigments such as C.I. Pigment Yellow 153 (Nickel Nitroso Yellow, etc.), metal complex azomethine pigments such as C.I. Pigment Yellow 117 (Copper Azomethine Yellow, etc.), acetolone pigments such as C.I. Pigment Yellow 120 (benzimidazolone yellow), C.I. Pigment Yellow 151, C.I. Pigment Yellow 154, C.I. Pigment Yellow 175, C.I. Pigment Yellow 180, C.I. Pigment Yellow 181, and C.I. Pigment Yellow 194, and nickel azo pigments such as C.I. Pigment Yellow 150. Among them, C.I. Pigment Yellow 74, C.I. Pigment Yellow 120, C.I. Pigment Yellow 150, C.I. Pigment Yellow 151, C.I. Pigment Yellow 154, C.I. Pigment Yellow 155, and C.I. Pigment Yellow 180 are preferably used.

Examples of pigments exhibiting a red or magenta color include monoazo pigments such as C.I. Pigment Red 3 (Toluidine Red, etc.), β-naphthol pigments such as C.I. Pigment Red 1, C.I. Pigment Red 4, and C.I. Pigment Red 6, disazo pigments such as C.I. Pigment Red 38 (Pyrazolone Red B, etc.), azo lake pigments such as C.I. Pigment Red 53:1 (Lake Red C, etc.), C.I. Pigment Red 57:1 (Brilliant Carmine 6B), C.I. Pigment Red 52:1 and C.I. Pigment Red 48 (β-oxynaphthoic acid lake, etc.), condensed azo pigments such as C.I. Pigment Red 144 (Azo Condensation Red, etc.), C.I. Pigment Red 166, C.I. Pigment Red 220, C.I. Pigment Red 214, C.I. Pigment Red 221, and C.I. Pigment Red 242, acidic dye lake pigments such as C.I. Pigment Red 174 (Phloxine B Lake, etc.) and C.I. Pigment Red 172 (erythrosine lake, etc.), basic dye lake pigments such as C.I. Pigment Red 81 (Rhodamine 6G' Lake, etc.), anthraquinone pigments such as C.I. Pigment Red 177 (Dianthraquinonyl Red, etc.), thioindigo pigments such as C.I. Pigment Red 88 (Thioindigo Bordeaux, etc.), perinone pigments such as C.I. Pigment Red 194 (Perinone Red, etc.), perylene pigments such as C.I. Pigment Red 149 (Perylene Scarlet, etc.), C.I. Pigment Red 179, C.I. Pigment Red 178, C.I. Pigment Red 190, C.I. Pigment Red 224, C.I. Pigment Red 123, and C.I. Pigment Red 224, quinacridone pigments such as C.I. Pigment violet 19 (unsubstituted quinacridone), C.I. Pigment Red 122 (Quinacridone Magenta, etc.), C.I. Pigment Red 262, C.I. Pigment Red 207, and C.I. Pigment Red 209, quinacridone pigments which are solid solutions of plurality of the above-mentioned quinacridone pigments, isoindolinone pigments such as C.I. Pigment Red 180 (Isoindolinone Red 2BLT, etc.), alizarin lake pigments such as C.I. Pigment Red 83 (Madder Lake, etc.), naphthone pigments such as C.I. Pigment Red 171, C.I, Pigment Red 175, C.I. Pigment Red 176, C.I. Pigment Red 185, and C.I. Pigment Red 208, naphthol AS type lake pigments such as C.I. Pigment Red 247, naphthol AS pigments such as C.I. Pigment Red 2, C.I. Pigment Red 5, C.I. Pigment Red 21, C.I. Pigment Red 170, C.I. Pigment Red 187, C.I. Pigment Red 256, C.I. Pigment Red 268, and C.I. Pigment Red 269, diketopyrrolopyrrole pigments such as C.I. Pigment Red 254, C.I. Pigment Red 255, C.I. Pigment Red 264, and C.I. Pigment Red 27. Among them, quinacridone pigments such as C.I. Pigment violet 19 (unsubstituted quinacridone), C.I. Pigment Red 122 (Quinacridone Magenta, etc.), C.I. Pigment Red 262, C.I. Pigment Red 207, and C.I. Pigment Red 209, and a quinacridone pigment which is a solid solution of plurality of the above-mentioned quinacridone pigments are preferable.

Examples of pigments exhibiting a blue or cyan color include disazo pigments such as C.I. Pigment Blue 25 (Dianisidine Blue, etc.), phthalocyanine pigments such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6 and C.I. Pigment Blue 16 (Phthalocyanine Blue, etc.), acidic dye lake pigments such as C.I. Pigment Blue 24 (Peacock Blue Lake, etc.), basic dye lake pigments such as C.I. Pigment Blue 1 (Victoria Pure Blue BO Lake, etc.), anthraquinone pigments such as C.I. Pigment Blue 60 (Indanthrone Blue, etc.), and alkali blue pigments such as C.I. Pigment Blue 18 (Alkali Blue V-5:1). Among them, copper phthalocyanine pigments such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, etc. are preferable.

Examples of pigments exhibiting a green color include phthalocyanine pigments such as C.I. Pigment Green 7 (Phthalocyanine Green) and C.I. Pigment Green 36 (Phthalocyanine Green), and azo metal complex pigments such as C.I. Pigment Green 8 (Nitroso Green) and C.I. Pigment Green 10.

Examples of pigments exhibiting an orange color include isoindoline pigments such as C.I. Pigment Orange 66 (Isoindoline Orange), anthraquinone pigments such as C.I. Pigment Orange 51 (Dichloropyranthrone Orange), β-naphthol pigments such as C.I. Pigment Orange 2, C.I. Pigment Orange 3, and C.I. Pigment Orange 5, naphthol AS pigments such as C.I. Pigment Orange 4, C.I. Pigment Orange 22, C.I. Pigment Orange 24, C.I. Pigment Orange 38, and C.I. Pigment Orange 74, isoindolinone pigments such as C.I. Pigment Orange 61, perynone pigments such as C.I. Pigment Orange 43, disazo pigments such as C.I. Pigment Orange 15 and C.I. Pigment Orange 16, qunacridone pigments such as C.I. Pigment Orange 48 and C.I. Pigment Orange 49, acetolone pigments such as C.I. Pigment Orange 36, C.I. Pigment Orange 62, C.I. Pigment Orange 60, C.I. Pigment Orange 64, and C.I. Pigment Orange 72, and pyrazolone pigments such as C.I. Pigment Orange 13 and C.I. Pigment Orange 34.

Examples of pigments exhibiting a brown color include naphthrone pigments such as C.I. Pigment Brown 25 and C.I. Pigment Brown 32.

Examples of pigments exhibiting a black color include indadine pigments such as carbon black (C.I. Pigment Black 7), titanium black, C.I. Pigment Black 1 (aniline black), and perylene pigments such as C.I. Pigment Black 31 and C.I. Pigment Black 32. Among them, C.I. Pigment Black 7 is preferable.

Specific examples of white pigments that can be used include basic lead carbonate (2PbCO₃Pb(OH)₂, also known as silver white), zinc oxide (ZnO, also known as zinc white), titanium oxide (TiO₂, also known as titanium white), and strontium titanate (SrTiO₃, also known as titan strontium white). Among them, titanium oxide is preferable. An inorganic particle used for a white pigment may be an elemental material, or a composite particle with an oxide of silicon, aluminum, zirconium, or titanium, or an organic metal compound, and an organic compound.

Here, titanium oxide, compared to other white pigments, has a less specific gravity and a greater refractive index, is chemically and physically stable, has a greater concealing and coloring power as a pigment, and furthermore has a superior durability against acid, alkali, and other environment. Therefore, the titanium oxide is preferably used as a white pigment. Of course, other white pigments (may be other than the above-mentioned white pigments) may be used as necessary.

Since the coloring property is more excellent as the average particle diameter is smaller for the pigment other than that of white color, in a case of applying the pigment dispersion of the invention to a pigment dispersion other than that of the white color, the average particle diameter of the pigment contained in the pigment dispersion is preferably about 0.01 µm to 0.4 µm, and more preferably form 0.02 µm to 0.3 µm.

Further, the maximum particle diameter of the pigment is preferably 3 µm or less, and more preferably 1 µm or less. The particle diameter of the pigment can be controlled, for example, by selecting the pigment, the dispersing agent, and the dispersion medium, and setting dispersion conditions and filtration conditions. Furthermore, in a case of preparing the ink composition of the present invention as a white ink composition, the average particle diameter of the pigment contained in the pigment dispersion is preferably about 0.05 µm to 1.0 µm, and more preferably about 0.1 µm to 0.4 µm, from a view point of providing a sufficient concealing power. Also for the case of preparing the white pigment dispersion, the maximum particle diameter of the pigment is preferably 3 µm or less, and more preferably 1 µm or less.

### Dispersant

When pigment particles are prepared, a pigment dispersant may be used if necessary. Examples of the pigment dispersant which may be used include surfactants such as higher fatty acid salts, alkyl sulfate salts, alkyl ester sulfate salts, alkyl sulfonate salts, sulfosuccinic acid salts, naphthalene sulfonate salts, alkyl phosphate salts, polyoxyalkylene alkyl ether phosphate salts, polyoxyalkylene alkyl phenyl ether, polyoxyethylene polyoxypropylene glycol, glycerin ester, sorbitan ester, polyoxyethylene fatty acid amide, or amine oxide; and block copolymers, random copolymers, and salts thereof formed from at least two types of monomers selected from the group consisting of styrene, a styrene derivative, a vinyl naphthalene derivative, acrylic acid, an acrylic acid derivative, maleic acid, a maleic acid derivative, itaconic acid, an itaconic acid derivative, fumaric acid, and a fumaric acid derivative.

The ink composition of the invention may use a self-dispersive pigment. A "self-dispersive pigment" as used in the present invention refers to a pigment capable of being dispersed without a dispersant, and is preferably a pigment particle having a polar group on a surface thereof.

A pigment particle having a polar group on a surface thereof (hereinbelow, may be referred to as "pigment derivative") as used in the present invention refers to a pigment obtained by directly modifying a surface of a pigment particle with a polar group, or an organic compound having an organic pigment nucleus having a polar group which is directly bonded thereto or bonded thereto via a joint.

Examples of the polar group include a sulfonic acid group, a carboxylic acid group, a phosphoric acid group, a boric acid group, and a hydroxyl group, and a sulfonic acid group and a carboxylic acid group are preferable, and a sulfonic acid group is more preferable.

As a method for preparing pigment particles having a polar group on the surface, for example, disclosed is a method in which a surface of a pigment is oxidized with appropriate oxidant result in introducing a polar group such as a sulfonic acid group or a salt thereof at least a part on a surface of a pigment in WO 97/48769, JP-A-10-110129, JP-A-11-246807, JP-A-11-57458, JP-A-11-18739, JP-A-11-323232, and JP-A-2000-265094. Specific examples thereof include a method for preparing by oxidation of carbon black by concentrated nitric acid and in the case of color pigment, a method for preparing by oxidation by sulfamic acid, sulfonated pyridine salt or amidesulfonic acid in sulfolane or N-methyl-2-pyrrolidone. In these reactions, pigment dispersion can be obtained by eliminating compounds which become soluble in water due to excess oxidation, and purifying. Further, in the case of introducing sulfonic acid group by oxidation, an acid group may be neutralized by a basic compound as appropriate.

As other method, cited is a method in which a pigment derivative disclosed in JP-A-11-49974, JP-A-2000-273383, JP-A-2000-303014 each is absorbed on the surface of pigment particles by a treatment such as milling, or a method in which a pigment disclosed in JP-A-2002-179977, JP-A-2002-201401 each is solved into a solvent as well as a pigment derivative and followed by a crystallization into a poor solvent. By any method, pigment particles having polar group on the surface can be easily obtained.

A polar group present at a pigment surface may be a free group or may be in the form of a salt, or may have a counter salt. Examples of the counter salt include inorganic salts (for example, lithium, sodium, potassium, magnesium, calcium, aluminum, nickel, or ammonium) and organic salts (for example, triethylammonium, diethylammonium, pyridinium, or triethanol ammonium), and a monovalent counter salt is preferable.

The content of the pigment relative to the entire amount of the ink composition of the present invention is preferably 0.5 mass% to 10 mass%, and more preferably 0.5 mass% to 5 mass%.

When the content of the pigment is in this range, an image having high image quality is obtained.

### Other Additives

The ink composition of the invention may further comprise a known additive in addition to Component A to Component C which are essential components, as long as the effect of the present invention is not impaired. Hereinbelow, additives which may be used in the ink composition are described.

### (Component D) Water-soluble organic solvent

The ink composition of the invention comprises water as a main solvent, and preferably further comprises (Component D) a water-soluble organic solvent. As used herein, the water-soluble organic solvent refers to an organic solvent having a solubility in water at 25 °C of 10 mass% or more.

Examples of water-soluble organic solvent which may be used in the invention include following solvents:
alcohols such as methanol, ethanol, propanol, isopropanol, butanol, isobutanol, secondary butanol, tertiary butanol, pentanol, hexanol, cyclohexanol, benzyl alcohol, etc.;
polyhydric alcohols such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, 2-methylpropanediol, etc.;
polyhydric alcohol ethers such as ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether; dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.;
amines such as ethanolamine, diethanolamine, triethanolamine, *N-*methyl diethanolamine, *N*-ethyl diethanolamine, morpholine, *N*-ethylmorpholine, ethylenediamine, diethylenediamine, triethyleneteteramine, tetraethylene pentamine, polyethylene imine, pentamethyl diethylenetriamine, tetramethyl propylenediamine, etc.;
amides such as formamide, *N,N*-dimethyl formamide, *N,N*-dimethyl acetamide, methoxypropionamide, *N*-methyl methoxypropionamide, *N,N-*dimethyl methoxypropionamide, *n*-butoxypropionamide, *N*-methyl *n-*butoxypropionamide, *N,N*-dimethyl *n*-butoxypropionamide, etc.;
heterocyclic compounds such as 2-pyrrolidone, *N*-methyl-2-pyrrolidone, cyclohexylpyrrolidone, 2-oxazolidinone, 1,3-dimethyl-2-imidazolidinone, γ-butyrolactone, propylene carbonate, ethylene carbonate, ethylene urea, etc.;
sulfoxides such as dimethyl sulfoxide, etc.;
sulfones such as sulfolane, etc.; and
other compounds such as urea, acetonitrile, acetone, etc.

Preferred examples of the water-soluble organic solvent include a polyhydric alcohol ether and a heterocyclic compound, and a combination thereof may be preferably used.

Preferable examples of the polyhydric alcoholic ethers include so-called glycol ethers. Specifically, tripropylene glycol monomethyl ether, dipropylene glycol monomethyl ether, and dipropylene glycol dimethyl ether are preferable, and 2-dipropylene glycol monomethyl ether is more preferable.

Preferred examples of the heterocyclic compound include 2-pyrrolidone, γ-butyrolactone, propylene carbonate, and ethylene urea, and 2-pyrrolidone and γ-butyrolactone are particularly preferable.

It is preferable to use a solvent having a high boiling point. The boiling point at standard pressure is preferably at least 120 °C, and more preferably at least 150 °C.

With regard to the water-soluble organic solvent, one type may be used or a plurality of types may be used in combination. The amount of water-soluble organic solvent added in the ink composition is preferably 1 mass% to 60 mass% as a total amount, and more preferably 2 mass% to 35 mass%.

### Surfactant

The ink composition of the present invention may comprise a surfactant.

Examples of preferable surfactant include anionic surfactants such as dialkyl sulfosuccinates, alkyl naphthalene sulfonates, or fatty acid salts; nonionic surfactants such as polyoxyethylene alkyl ethers, polyoxyethylene alkyl allyl ethers, acetylene glycols, or polyoxyethylene-polyoxypropylene block copolymers; and cationic surfactants such as alkyl amine salts or quaternary ammonium salts. Among them, an anionic surfactant and a nonionic surfactant are particularly preferably used.

In the invention, a polymer surfactant may be used. Any one of water-soluble resins mentioned below is preferably used as the polymer surfactant. Examples of water-soluble resins include styrene-acrylic acid-alkyl acrylate copolymers, styrene-acrylic acid copolymers, styrene-maleic acid-alkyl acrylate copolymers, styrene-maleic acid copolymers, styrene-methacrylic acid-alkyl acrylate copolymers, styrene-methacrylic acid copolymers, styrene-maleic acid half ester copolymers, vinylnaphthalene-acrylic acid copolymers, and vinylnaphthalene-maleic acid copolymers.

Furthermore, in the present invention, it is also possible to preferably use a polyalkylsiloxane-containing silicone-based surfactant or an alkyl fluoride group-containing fluorine-based surfactant.

When a surfactant is used in the ink composition of the present invention, it is preferable for the amount thereof added to be preferably at least 0.1 mass% but no greater than 5 mass% as a solids content amount added, and it is particularly preferable for the solids content amount of surfactant added to be at least 0.5 mass% but no greater than 2 mass%.

### Sensitizing dye

In the present invention, a known sensitizing dye may be used in combination. With regard to solubility, one that dissolves in distilled water at room temperature to the extent of at least 0.5 mass% is preferable, one that dissolves to the extent of at least 1 mass% is more preferable, and one that dissolves to the extent of at least 3 mass% is yet more preferable. Furthermore, as the sensitizing dye, a photopolymerization initiator formed by dispersing a water-insoluble polymerization initiator may also be used.

The sensitizing dye absorbs specific actinic radiation to attain an electronically excited state.

The sensitizing dye may employ a compound that is appropriate for the wavelength of actinic radiation. While taking into consideration its use in a curing reaction of a general ink composition, preferred examples of the sensitizing dye includes those belonging to the types of compounds below and having an absorption wavelength in the range of 350 nm to 450 nm.

Examples of the sensitizing dye include polynuclear aromatic compounds (e.g. anthracene, pyrene, perylene, triphenylene), thioxantones (e.g. isopropylthioxantone), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin). A polynuclear aromatic compound and a thioxanthone can be cited as a preferred example, and among them a thioxanthone is preferable and isopropylthioxanthone is most preferable.

Other examples of the sensitizing dyes include *N*-[2-hydroxy-3-(3,4-dimethyl-9-oxo-9*H*-thioxanthene-2-yloxy)propyl]-*N,N,N*,-trimethyl aluminum chloride, benzophenone, 3-acyl coumalin derivatives, terphenyl, styryl ketone, 3-(aroylmethylene)thiazoline, a camphor quinone, eosin, rhodamine, and erythrosine, modified products thereof obtained by imparting water-solubility, and a dispersion thereof. Compounds represented by general formula (i) described in JP-A-2010-24276 and compounds represented by general Formula (I) described in JP-A-6-107718 are also suitably used.

### Cosensitizer

The ink composition of the present invention preferably comprises a cosensitizer. In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl *p-*dimethylaminobenzoate, *p*-formyldimethylaniline, and *p-*methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3*H*)-quinazoline, and p-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H, Ge-H compounds described in JP-A-8-65779.

### Polymerizable compound

In the present invention, another polymerizable compound may be used in combination. The compound used in combination is preferably water-soluble, and from the viewpoint of stability in an aqueous solvent it is preferably a (meth)acrylamide compound, a polyvalent allyl compound, a monofunctional *N*-vinyllactam compound, or a cationic polymerizable compound, and is particularly preferably a (meth)acrylamide compound.

Polymerizable compounds that can be used in the present invention are explained in detail below.

As a polyvalent (meth)acrylamide compound, in terms of having high polymerizability and curability, a compound represented by Formula (2) below is preferable. This compound has four acrylamide groups or methacrylamide groups in the molecule as polymerizable groups. This compound also exhibits curability based on a polymerization reaction resulting from the application of energy such as heat or actinic radiation such as for example α-rays, γ-rays, X rays, UV, visible light, infrared light, or an electron beam. The compound represented by Formula (2) below exhibits water solubility and dissolves well in water or a water-soluble organic solvent such as an alcohol.

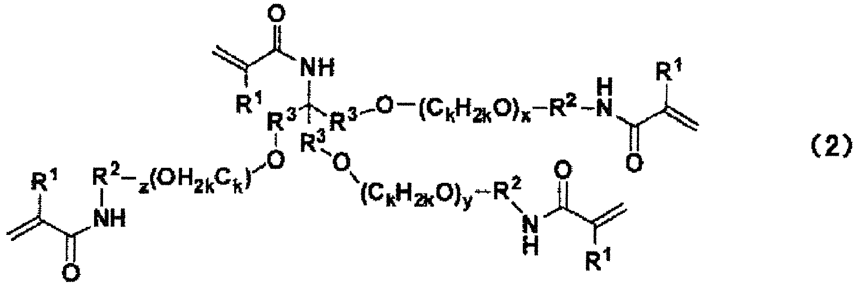

In Formula (2), R¹ independently denotes a hydrogen atom or a methyl group, and is preferably a hydrogen atom. A plurality of R¹ may be the same or different from each other.

R² independently denotes a linear or branched alkylene group having 2 to 4 carbon atoms. A plurality of R² may be the same or different from each other. R² is preferably an alkylene group having 3 to 4 carbon atoms, more preferably an alkylene group having 3 carbon atoms, and particularly preferably a linear alkylene group having 3 carbon atoms. The alkylene group of R² may also have a substituent, and examples of the substituent include an aryl group, an alkoxy group, or the like.

However, in R², the oxygen atoms and nitrogen atoms bonded to both ends of the R² do not have a structure which is bonded to the same carbon atom of R². R² is a linear or branched alkylene group linking the oxygen atoms and nitrogen atoms of the (meth)acrylamide group. Here, in a case where the alkylene group has a branched structure, it is considered that the oxygen atoms and nitrogen atoms of the (meth)acrylamide group at both ends bond to the same carbon atom in the alkylene group, and take -O-C-N-structure (hemiaminal structure); however, the compound represented by Formula (2) does not include a compound of such a structure. The compound having the -O-C-N- structure in the molecule is not preferable in terms of factors such as that, since degradation easily occurs at the position of the carbon atom, degradation easily occurs during storage, and the storage stability is decreased in a case where the ink composition contains the compound.

R³ denotes a divalent linking group, and a plurality of R³ may be the same or different from each other. Examples of the divalent linking group denoted by R³ include an alkylene group, an arylene group, a heterocyclic group, a group formed of a combination of these, or the like, and an alkylene group is preferable. Here, in a case where the divalent linking group includes an alkylene group, at least one type of group selected from -O-, -S-, and -NR⁴-may be further included in the alkylene group. R³ denotes a hydrogen atom or an alkyl group having 1 to 4 carbon atoms.

In a case where R³ includes an alkylene group, examples of the alkylene group include a methylene group, an ethylene group, a propylene group, a butylene group, a pentylene group, a hexylene group, a heptylene group, an octylene group, a nonylene group, or the like. The alkylene group of R³ preferably has 1 to 6 carbon atoms, more preferably 1 to 3, and particularly preferably 1. In the alkylene group of R³, at least one type selected from -O-, -S-, and -NR^{a}- may be further included. Examples of the alkylene group including -O- include -C₂H₄-O-C₂H₄-, -C₃H₆-O-C₃H₆-, and the like. The alkylene group of R³ may also have a substituent, and examples of the substituent include an aryl group, an alkoxy group, or the like.

In a case where R³ includes an arylene group, examples of the arylene group include a phenylene group, a napthylene group and the like, and the number of carbon atoms of R³ is preferably 6 to 14, more preferably 6 to 10, and particularly preferably 6. The arylene group of R³ may also have a substituent, and examples of the substituent include an alkyl group, an alkoxy group, or the like.

In a case where R³ includes a heterocyclic group, as the heterocyclic group, a 5-membered or 6-membered heterocyclic group is preferable, and these may be further condensed. In addition, the heterocycle may be an aromatic heterocycle or a non-aromatic heterocycle. Examples of the heterocyclic group include a residue in which two hydrogen atoms are removed from the heterocycle such as pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine, thiazoline, and the like. Among them, an aromatic heterocyclic group is preferable, and a residue in which two hydrogen atoms are removed from the aromatic heterocycle such as pyridine, pyrazine, pyrimidine, pyridazine, triazine, pyrazole, imidazole, benzimidazole, triazole, thiazole, benzothiazole, isothiazole, benzisothiazole, and thiadiazole is preferable. Here, the heterocyclic groups given in the above description have been given in a form in which the substitution position is omitted; however, the substitution position is not limited. For example, for pyridine, substitution at the 2-position, 3-position, and 4-position is possible and it is possible to include all these substitutions.

The heterocyclic group may also have a substituent, and examples of the substituent include an alkyl group, an aryl group, and alkoxy group, or the like.

k in Formula (2) denotes 2 or 3. A plurality of k may be the same or different from each other. In addition, CₖH₂ₖ may be a linear structure or a branched structure.

In addition, x, y, and z each independently denote integers of 0 to 6, preferably integers of 0 to 5, and more preferably integers of 0 to 3, x+y+z satisfies 0 to 18, preferably satisfies 0 to 15, and more preferably satisfies 0 to 9.

Among the above-described cases, a case is preferable in which R¹ denotes a hydrogen atom or a methyl group; R² denotes an alkylene group having 2 or 4 carbon atoms; R³ denotes an alkylene group having 1 to 6 (preferably 1 to 3) carbon atoms; k denotes 2 or 3; x, y, and z each independently denote an integer of 0 to 6; and a value of x+y+z satisfies an integer of 0 to 15.

Specific examples of the compound represented by Formula (2) are shown below. However, the present invention is not limited thereto.

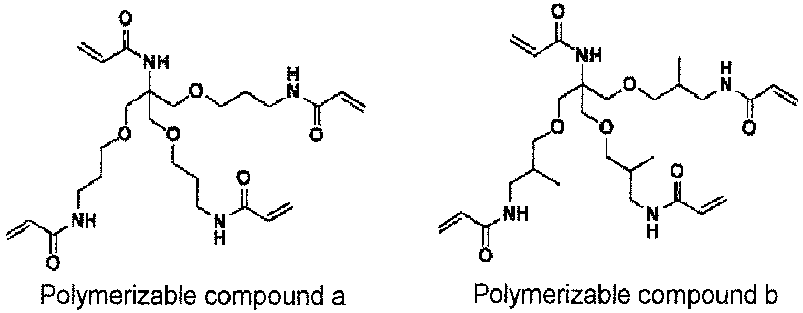

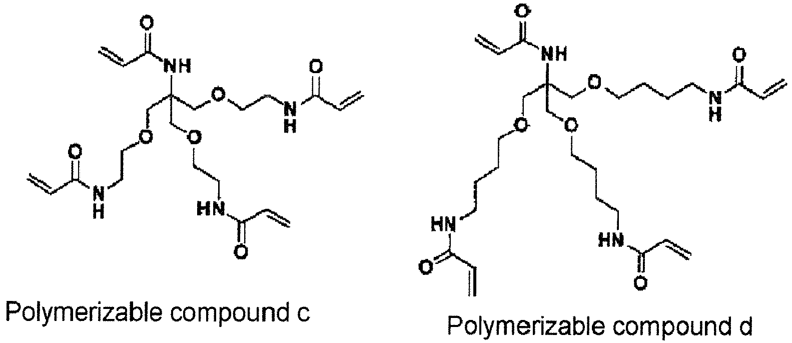

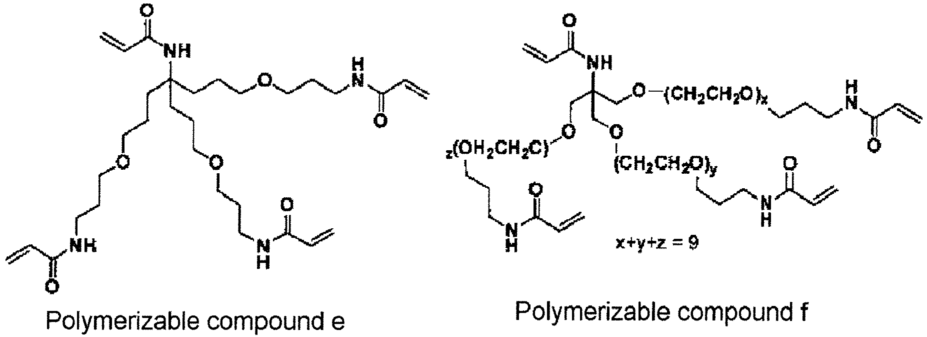

The compound represented by Formula (2) can be prepared according to the following scheme 1 or scheme 2.

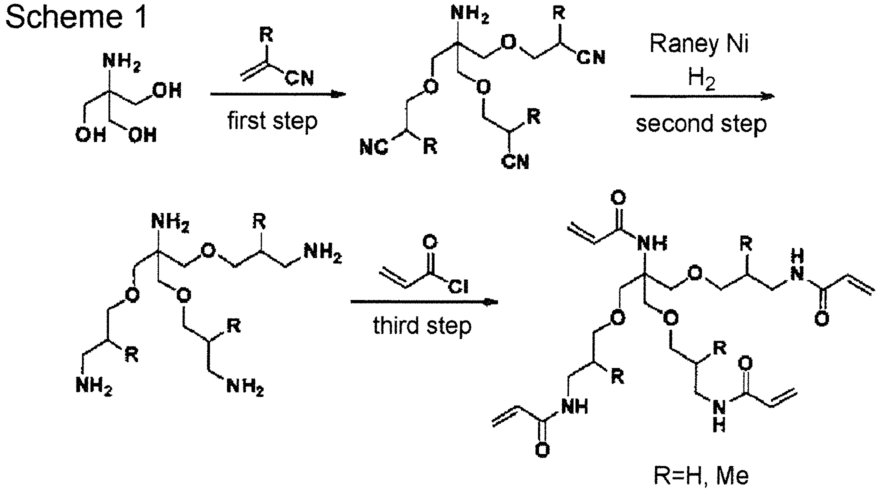

In Scheme 1, the first step is a step of obtaining a polycyano compound by a reaction of acrylonitrile and trishydroxymethylaminomethane. The reaction in this step is preferably performed at 3 to 60°C for 2 to 8 hours.

The second step is a step of reacting the polycyano compound with hydrogen in the presence of a catalyst and obtaining a polyamine compound by a reduction reaction. The reaction in this step is preferably performed at 20 to 60°C for 5 to 16 hours.

The third step is a step of obtaining a polyfunctional acrylamide compound by an acylating reaction of the polyamine compound and acrylic acid chloride or methacrylic acid chloride. The reaction in this step is preferably performed at 3 to 25 °C for 1 to 5 hours. Here, instead of (meth)acrylic acid chloride, the acylating agent may use diacrylate anhydride or dimethacrylic anyhydride. Here, in the acylation step, by using both acrylic acid chloride and methacrylic acid chloride, it is possible to obtain a compound having an acrylamide group and methacrylamide group in the same molecule as the final product.

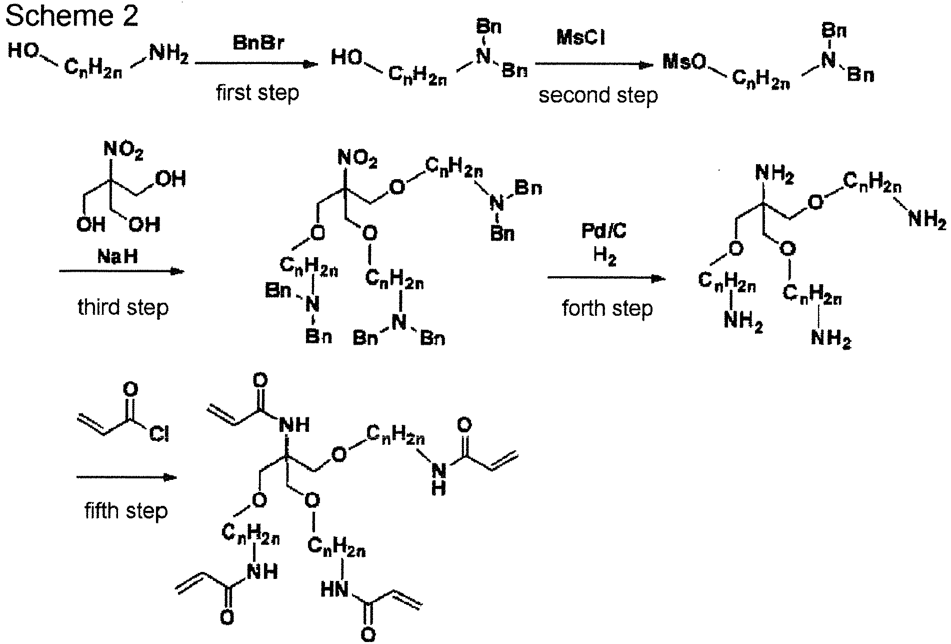

In Scheme 2, the first step is a step of obtaining a nitrogen protected amino alcohol compound by a protective group introduction reaction according to a benzyl group, a benzyloxycarbonyl group, or the like in a nitrogen atom of an amino alcohol. The reaction in this step is preferably performed at 3 to 25°C for 3 to 5 hours.

The second step is a step of introducing a leaving group such as methanesulfonyl group, a *p*-toluenesulfonyl group, or the like into an OH group of a nitrogen protected amino alcohol compound, and obtaining a sulfonyl compound. The reaction in this step is preferably performed at 3 to 25°C for 2 to 5 hours.

The third step is a step of obtaining an amino alcohol adduct compound by an SN2 reaction of the sulfonyl compound and tris hydroxymethyl nitro methane. The reaction in this step is preferably performed at 3 to 70°C for 5 to 10 hours.

The fourth step is a step of reacting the amino alcohol adduct compound with hydrogen in the presence of a catalyst and obtaining a polyamine compound by a hydrogenation reaction. The reaction in this step is preferably performed at 20 to 60°C for 5 to 16 hours.

The fifth step is a step of obtaining a polyfunctional acrylamide compound by an acylating reaction of the polyamine compound and acrylic acid chloride or methacrylic acid chloride. The reaction in this step is preferably performed at 3 to 25°C for 1 to 5 hours. Here, instead of (meth)acrylic acid chloride, the acylating agent may use diacrylate anhydride or dimethacrylic anhydride. Here, in the acylation step, by using both acrylic acid chloride and methacrylic acid chloride, it is possible to obtain a compound having an acrylamide group and methacrylamide group in the same molecule as the final product.

The compound obtained through the above-described steps is obtained by purification of the reaction product solution by a conventional method. For example, it is possible to perform purification by liquid separation and extraction using an organic solvent, crystallization using a poor solvent, column chromatography using silica gel, or the like.

The content of the polyvalent (meth)acrylamide in the ink composition relative to the total amount of the ink composition is preferably at least 3 mass% but no greater than 15 mass%, more preferably at least 5 mass% but no greater than 12.5 mass%, and yet more preferably at least 5 mass% but no greater than 10 mass%. It is preferable for the content of the polyvalent (meth)acrylamide to be in this range since a curing reaction proceeds sufficiently, uniformity of curing over the entire image is excellent, and uniform gloss can be obtained.

In the present invention, a mode in which a polyvalent allyl compound is used in combination with the polyvalent (meth)acrylamide is also desirable.

Examples of the polyvalent allyl compound include allyl ether compounds such as trimethylolpropane diallyl ether, glycerin diallyl ether, pentaerythritol diallyl ether, pentaerythritol triallyl ether, dipentaerythritol pentaallyl ether, dipentaerythritol tetraallyl ether, and dipentaerythritol triallyl ether, alkylene oxide derivatives thereof, and triallyl isocyanurate.

In the present invention, a mode in which a monofunctional (meth)acrylamide is used in combination with the polyvalent (meth)acrylamide is also desirable. Due to the monofunctional (meth)acrylamide being contained, an ink having excellent penetrability into a pigment layer in a coated paper is obtained. This enables not only an image but also a pigment layer to be cured, thus further improving adhesion.

The polymerizable compound having an acrylamide structure in a molecule thereof is preferably a compound represented by Formula (1). 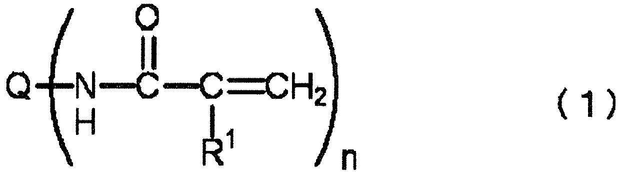 (In Formula (1), Q denotes an n-valent linking group; R¹ denotes a hydrogen atom or a methyl group; and n denotes an integer of 1 or more.)

The compound represented by Formula (1) is one in which an unsaturated vinyl monomer is bonded to the linking group Q via an amide linkage. R¹ denotes a hydrogen atom or a methyl group and is preferably a hydrogen atom. The valence n of the linking group Q is not limited and from the viewpoint of improving the polymerization efficiency and the ejection stability, n is preferably 1 to 6.

As the monofunctional (meth)acrylamide, a compound in which n = 1 in Formula (1) above can be cited. The group Q when n = 1 may be a monovalent group that can be linked to the (meth)acrylamide structure, and the group Q when n = 1 is suitably a group having water solubility.

Specific examples thereof include a residue in which one or more hydrogen atoms or hydroxyl groups are removed from the following compound group X.

Compound Group X: Polyols, such as ethylene glycol, diethylene glycol, triethylene glycol, polyethylene glycol, propylene glycol, dipropyrene glycol, tripropylene glycol, polypropylene glycol, 1,3-propanediol, 1,2-butanediol, 1,3-butanediol, 1,4-butanediol, 2,3-butanediol, 1,5-pentanediol, 1,4-pentanediol, 2,4-pentanediol, 3-methyl-1,5-pentanediol, 2-methyl-2,4-pentanediol, 1,5-hexanediol, 1,6-hexanediol, 2,5-hexanediol, glycerin, 1,2,4-butanetriol, 1,2,6-hexanetriol, 1,2,5-pentanetriol, thioglycol, trimethylolpropane, ditrimethylolpropane, trimethylolethane, ditrimethylolethane, neopentylglycol, pentaerythritol, dipentaerythritol and condensates thereof, low molecular weight polyvinyl alcohol, or sugars; and polyamines, such as ethylenediamine, diethylenetriamine, triethylenetetramine, polyethyleneimine, and polypropylenediamine.

Specific examples of the monofunctional (meth)acrylamide include the following compounds.

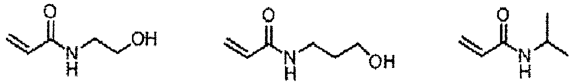

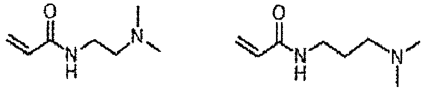

In the present invention, a mode in which a monofunctional allyl ether is used in combination with the polyvalent (meth)acrylamide is also suitable.

Examples of the monofunctional allyl ether include ethyleneglycol monoallyl ether, propyleneglycol monoallyl ether, neopentylglycol monoallyl ether, trimethylolpropane monoallyl ether, 1,2-butyleneglycol monoallyl ether, 1,3-butyleneglycol monoallyl ether, hexyleneglycol monoallyl ether, octyleneglycol monoallyl ether, pentaerythritol monoallyl ether.

Furthermore, in the present invention, a mode in which a monofunctional N-vinyllactam compound is used in combination with the polyvalent (meth)acrylamide is also suitable.

With regard to the *N*-vinyllactam compound, there is no particular limitation, and monofunctional *N*-vinyllactam compound (i.e., *N*-vinyllactam compound having one ethylenically unsaturated double bond) is preferable. *N*-vinyllactam compound is preferably a compound represented by Formula (A) below.

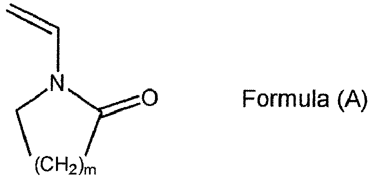

In Formula (A), m denotes an integer of 1 to 5.

m is preferably an integer of 2 to 4, and more preferably 2 or 4, from the viewpoint of flexibility after the ink composition is cured, adhesion to a recording medium, and ready availability of starting materials. That is, at least one of *N*-vinylpyrrolidone and *N*-vinylcaprolactam is preferable. *N-*Vinylcaprolactam is preferable since it has excellent safety, is commonly used and is readily available at a relatively low price, and gives particularly good ink curability and adhesion of a cured film to a recording medium.

The *N*-vinyllactam compound may have a substituent such as an alkyl group or an aryl group on the lactam ring, and may have a saturated or unsaturated ring structure bonded to the lactam ring.

With regard to the *N*-viyllactam compound, one type thereof may be used or two or more types thereof may be used in combination.

Furthermore, a cationic polymerizable compound may be used in combination with the polyvalent (meth)acrylamide. The cationic polymerizable compound is a compound having a cationic group and a polymerizable group such as an unsaturated double bond and, for example, an epoxy monomer, an oxetane monomer, etc. may suitably be used. When the cationic polymerizable compound is contained, the ink composition becomes strongly cationic due to it having a cationic group, and color mixing when an anionic ink is used can be prevented more effectively.

In the ink composition of the invention, various kinds of known additive such as a viscosity controlling agent, a surface tension controlling agent, a relative resistivity controlling agent, a film forming agent, an antiseptic agent, a dispersant, a surfactant, a UV absorber, an antioxidant, an anti-fading agent, an anti-mold agent, a rust preventive, a solid wetting agent, and silica fine particles may be added, as necessary, in addition to the foregoing materials corresponding to the purposes of improving various properties of the ink such as the ejection stability, suitability for the print head or the ink cartridge, storage stability, an image storage stability and other performances. Examples thereof include minute oil droplets of liquid paraffin, dioctyl phthalate, tricresyl phosphate, or silicone oil, UV absorbers described in JP-A-57-74193, JP-A-57-87988, and JP-A-62-261476, anti-fading agents described in JP-A-57-74192, JP-A-57-87989, JP-A-60-72785, JP-A-61-146591, JP-A-1-95091, and JP-A-3-13376, optical brightening agents described in JP-A-59-42993, JP-A-59-52689, JP-A-62-280069, JP-A-61-242871, and JP-A-4-219266, pH adjusters such as sulfuric acid, phosphoric acid, citric acid, sodium hydroxide, potassium hydroxide, potassium carbonate.

It is preferable for the ink composition of the present invention not to contain a polymerization initiator. In the present invention, Component A can undergo polymerization by a 2+2 cycloaddition reaction, and a polymerization reaction can be caused by irradiation with UV without adding a polymerization initiator. When a polymerization initiator is contained, the polymerization initiator, a cleavage product thereof, etc. remains in the cured film after curing, and the so-called migration problem, in which such low-molecular-weight compounds bleed from the cured film (image), can occur in some cases, and this causes a problem in food industry applications in particular. The content of the polymerization initiator is preferably no greater than 5 mass% of the entire ink composition, more preferably no greater than 3 mass%, yet more preferably no greater than 1 mass%, and particularly preferably none, that is, the polymerization initiator having a content of 0 mass%.

Furthermore, since unpolymerized monomer might remain in the same manner, it is preferable for the ink composition of the present invention not to contain a radically polymerizable ethylenically unsaturated monomer or a cationically polymerizable epoxy compound, oxetane compound, etc. The content of the radically polymerizable compound and cationically polymerizable compound in the ink composition is preferably no greater than 5 mass%, more preferably no greater than 3 mass%, yet more preferably no greater than 1 mass%, and particularly preferably none, that is, the radically polymerizable compound and cationically polymerizable compound having a content of 0 mass%. The radically polymerizable compound and cationically polymerizable compound having a content of no greater than 5 mass% means that the total content of a radically polymerizable ethylenically unsaturated compound and a cationically polymerizable epoxy compound and oxetane compound, etc. is no greater than 5 mass%.

Since Component A used in the present invention is thermally relatively stable and cures by irradiation with relatively short wavelength UV, the ink composition of the present invention has excellent storage stability. When the radically polymerizable compound or the cationically polymerizable compound is used in combination, there is a possibility that such characteristics will be impaired.

### Method for preparing ink composition

A method of preparing the ink composition of the present invention is not particularly limited, and the ink composition may be prepared by stirring, mixing, and dispersing respective components using a container-driven medium mill such as a ball mill, a centrifugal mill, or a planetary balls mill, a high-speed rotary mill such as a sand mill, a medium agitating mill such as a mixing vessel-type mill, or a simple dispersion apparatus such as a disper. The components can be added in any order. Preferably, Component C, the polymeric dispersant, and the organic solvent are pre-mixed and then dispersed, and the dispersion thus obtained is mixed with Component A and Component B. In this case, at the time of addition or after addition, the components are uniformly mixed using a simple stirring apparatus such as a three-one motor, a magnetic stirrer, a disper, or a homogenizer. Alternatively, a mixing apparatus such as a line mixer may be used for mixing. In order for ultra-fining of dispersed particles, a dispersing apparatus such as a bead mill or a high-pressure jet mill may be used for mixing. Depending on the type of pigment, polymer dispersing agent, or the like, a resin may be added at the time of pre-mixing carried out before a pigment dispersing treatment.

The ink composition of the present invention preferably has a surface tension at 25°C of from 20 mN/m to 40 mN/m. The surface tension may be measured under conditions of 25°C using an automatic surface tensiometer CBVP-Z (trade name, manufactured by Kyowa Interface Science Co., Ltd.). It is preferable for the surface tension to be at least 20 mN/m since the wettability is appropriate, and image spreading is suppressed, and for it to be no greater than 40 mN/m since interference between fired droplets is suppressed and image graininess is reduced.

The viscosity is preferably from 1 mPa·s to 40 mPa·s, and more preferably from 3 mPa·s to 30 mPa·s. The viscosity of the ink composition may be measured under conditions of 25°C using a viscometer TV-22 (trade name, manufactured by Toki Sangho Co., Ltd.). When the viscosity is in the range described above, excellent discharge properties of the ink can be obtained, which is preferable.

### 2. Process for producing decorative sheet

The process for producing a decorative sheet of the present invention comprises a discharge step of discharging the ink composition of the present invention onto a recording medium, a drying step of drying the ink composition above the recording medium by means of heat, and a curing step of curing the ink composition above the recording medium by means of a light source having a peak wavelength of 200 nm to 300 nm.

Each of the steps is explained below.

### Discharge step

The discharge step in the present invention is not particularly limited as long as it is a discharge step of discharging an ink composition onto a recording medium, and it is a step of discharging the ink composition of the present invention above a recording medium by an inkjet method.

In the process for producing a decorative sheet of the present invention, inkjet recording equipment used in the discharge step is not particularly limited and may be freely selected from known inkjet recording equipment that can achieve a desired resolution. That is, any known inkjet recording equipment, including commercial products, may carry out discharge of an ink composition onto a recording medium in the process for producing a decorative sheet of the present invention.

The inkjet recording device that can be used in the present invention is equipped with, for example, an ink supply system, a temperature sensor, and a heating means.

The ink supply comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000dpi (dot per inch), more preferably 400 x 400 to 1,600 x 1,600dpi, and yet more preferably 720 x 720 dpi. Here, dpi referred to in the present invention means the number of dots per 2.54 cm (1 inch).

Since the temperature of the discharged ink composition is desirably constant, the inkjet recording device is preferably equipped with means for stabilizing the temperature of the ink composition. The section for which the temperature is made constant includes the whole of a piping system and all of the members from an ink tank (middle tank where it is present) to a nozzle injection face. That is, a section from an ink supply tank to an inkjet head portion can be thermally insulated and heated.

A method of controlling temperature is not particularly limited, but it is preferable to provide, for example, temperature sensors at a plurality of piping locations, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition is discharged using the above-mentioned inkjet recording device, the ink composition is preferably discharged after being heated to preferably 25°C to 80°C, and more preferably 25°C to 50°C, so as to reduce the viscosity of the ink composition to preferably 3 mPa·s to 15 mPa·s, and more preferably 3 mPa·s to 13 mPa·s. In particular, it is preferable to use an ink composition having an ink viscosity at 25°C of no greater than 50 mP·s as the ink composition of the present invention since discharging can be carried out well. By employing this method, high discharge stability can be realized.

It is preferable to maintain the ink composition discharge temperature as constant as possible. In the present invention, the control range for the temperature of the ink composition is preferably ±5°C of a set temperature, more preferably ±2°C of the set temperature, and yet more preferably ±1°C of the set temperature.

### Drying step

The process for producing a decorative sheet of the present invention comprises a drying step after the discharge step and before the curing step.

In the drying step, it is preferable for the ink composition discharged above the recording medium to be fixed as a result of water and a water-soluble organic solvent, which is used in combination as necessary, being evaporated by heating means.

The step (drying step) in which the discharged ink composition of the present invention is dried and fixed by the application of heat is now explained.

The heating means is not limited as long as it can dry water and a water-soluble organic solvent, which is used in combination as necessary, and examples thereof include a heated drum, hot air, an infrared lamp, a heated oven, and a heated plate.

The heating temperature is preferably at least 40°C, more preferably on the order of 40°C to 150°C, and yet more preferably on the order of 40°C to 80°C. The drying/heating time may be set appropriately while taking into consideration the constitution of the ink composition and the printing speed.

The ink composition fixed by heating is further cured in the curing step by irradiation with UV using a light source having a peak wavelength of 200 nm to 300 nm.

### Curing step

The curing step in the process for producing a decorative sheet of the present invention is explained below.

The curing step in the present invention is not limited as long as it is a step of irradiating the ink composition applied above the recording medium with actinic radiation.

With regard to actinic radiation that can be used in the curing step, a light source having a peak wavelength of 200 nm to 300 nm is used. The peak wavelength is preferably 200 nm to 280 nm. As a result of irradiation with actinic radiation having such a wavelength, a 2+2 cycloaddition reaction of the partial structure represented by Formula (1) in the specific copolymer is caused, thus curing the ink composition.

It is preferably to irradiate with UV light at an exposed surface illuminance of, for example, 10 mW/cm² to 2,000 mW/cm², and more preferable from 20 mW/cm² to 1,000 mW/cm².

As the UV light source, a mercury lamp, a gas/solid laser and the like are mainly used, and a mercury lamp, a metal halide lamp and a fluorescent lamp are widely known. Furthermore, replacement with GaN-based semiconductor ultraviolet emitting devices is industrially and environmentally very useful, and LED (UV-LED) and LD (UV-LD) are devices of small size, long service life, high efficiency and low cost, and are expected to be used as UV light sources.

In the present invention, it is preferable not to use a sensitizing dye or a photopolymerization initiator in combination, and the light source is preferably a medium-pressure mercury lamp or a low-pressure mercury lamp, more preferably a low-pressure mercury lamp and, among low-pressure mercury lamps, particularly preferably a germicidal lamp.

### Germicidal lamp

The germicidal lamp used as the light source in the present invention is now explained. The germicidal lamp used in the present invention is a lamp utilizing low-pressure mercury vapor discharge. The principle of its light emission is that when a high voltage is applied to electrodes mounted at opposite ends within a glass tube, electrons within the tube are accelerated by the electric field and collide with a rare gas within the tube, thus ionizing it. When cations generated by this ionization are sufficiently accelerated by the electric field, they hit the cathode to thus emit secondary electrons, thereby initiating a discharge. The secondary electrons generated by the discharge collide with mercury particles to thus excite the mercury particles, and when excited mercury atoms release energy as light, UV is emitted. Resonance lines of mercury generated in this process are at wavelengths of 254 nm and 185 nm, and in order to efficiently transmit light at this wavelength, a glass tube is used. As the lamp, a quartz glass lamp such as a natural quartz glass lamp or a synthetic quartz glass lamp, an amalgam lamp in which an amalgam is also enclosed, a UV-transmitting glass lamp with excellent cost performance, etc. may preferably be used.

Since the constitution of the germicidal lamp of the present invention is the same as that of a normal fluorescent lamp, it has a very low price compared with a metal halide type curing light source or LED type curing light source, which is normally used in the curing of a UV ink, and equipment can be constructed at low cost even if the light source is disposed throughout the printing width.

In the curing step, the ink composition of the present invention is irradiated with the UV light suitably for, for example, 0.01 seconds to 120 seconds, and preferably from 0.1 seconds to 90 seconds.

Irradiation of an active energy ray is carried out after a certain time (for example, from 0.01 seconds to 120 seconds, and preferably from 0.1 seconds to 60 seconds) after discharging of the ink and heat drying.

As irradiation conditions and basic irradiating methods, irradiation conditions and basic irradiating methods disclosed in JP-A-60-132767 can be applied in the present invention in the same manner. Specifically, examples thereof include a method in which light sources provided on both sides of a head unit including an ink discharging device and the head unit and the light sources are scanned in a so-called shuttle method, and a method in which irradiation is performed by separate light sources that do not involve driving. In the present invention, it is preferable to irradiate using a germicidal lamp having a length of at least the printing width, and it is effective when a recording medium having a relatively large thickness is used.

### Recording medium

In the present invention, the recording medium is not particularly limited, and known recording medium known as a support or a recording material may be used. The recording medium is preferably for example a plastic substrate, and particularly preferably a plastic substrate that is preferably used for heat stretching.

Specifically, polycarbonate, PET (polyethylene terephthalate), an acrylic resin, and an ABS resin are preferable, and polycarbonate is particularly preferable.

In the present invention, the recording medium preferably has a thickness of at least 300 pm, more preferably 300 µm to 10 mm, yet more preferably 500 µm to 5 mm, and particularly preferably 600 µm to 3 mm.

It is preferable for the thickness of the recording medium to be in this range since it is suitable for thermal molding when forming a decorative sheet molded article.

When a recording medium having a relatively large thickness is used as described above, even if heating is carried out from the face opposite to the face to which the ink composition is applied (hereinafter, also called the 'reverse face'), thermal conduction is insufficient, and it is difficult to use a heated roll for a recording medium having a large thickness. A conventional aqueous ink has the problem that the image is disturbed before being dried sufficiently. Furthermore, it is the same with an aqueous UV ink; curing cannot be carried out unless water is removed first, and there is the problem that image disturbance occurs.

It is presumed that these problems have been solved in the present invention since solvent such as water is removed to thus increase the viscosity of the ink composition and carry out pinning.

It is preferable for the ink composition of the present invention to be used as an ink set comprising a plurality of ink compositions. In the present invention, among a plurality of ink compositions, any one of the ink compositions may comprise Component A to Component C, but is preferable for all of the ink compositions to be the ink composition of the present invention comprising Component A to Component C.

Examples of the ink compositions forming an ink set include, but are not limited to, ink compositions of each color of yellow, cyan, magenta, and black, and a mode comprising an ink composition of a light color such as light cyan or light magenta, a mode comprising a white ink composition, a mode comprising an ink with a special color such as green or orange, a mode comprising a metal ink composition with a metal color, etc. may be employed.

In the present invention, the order in which colored ink compositions are discharged is not particularly limited, but it is preferable to apply to a recording medium from a colored ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are preferably applied on top of the recording medium in the order white → light cyan → light magenta → yellow → cyan → magenta → black.

The decorative sheet is provided with an image layer formed by curing the ink composition of the present invention.

Furthermore, it is also preferable to produce a decorative sheet molded product by further including a step of subjecting the decorative sheet to vacuum forming, pressure forming, or vacuum/pressure forming.

Moreover, it is preferable for the decorative sheet molded product to be subjected to hole making.

In particular, since an image layer obtained from the ink composition of the present invention has excellent stretchability and heat resistance, even when it is subjected to vacuum forming, pressure forming, or vacuum/pressure forming, white spots, cracking, etc. in an image are suppressed. Furthermore, cracking of an image during hole making is also suppressed.

### Vacuum forming, pressure forming, vacuum/pressure forming

Vacuum forming is a method in which a support having an image formed thereon is preheated to a temperature at which it can be thermally deformed, and molding is carried out by pressing it against a mold and cooling while sucking it toward the mold by means of a vacuum and stretching it. It is preferable to use a convex mold and a concave mold in combination in vacuum forming.

Pressure forming is a method in which a support having an image formed thereon is preheated to a temperature at which it can be thermally deformed, and molding is carried out by pressing it against a mold by applying pressure from the side opposite to the mold and cooling.

Vacuum/pressure forming is a method in which molding is carried out by applying a vacuum and pressure at the same time.

Details may be referred to in the 'Thermal Forming' section on p. 766 to 768 of 'Koubunshi Daijiten' (Polymer Dictionary) (Maruzen Co., Ltd.) and literature referred to in this section.

The forming temperature may be determined as appropriate according to the type of support and the support, but it is preferable to carry out forming at a support temperature of 60°C to 180°C, more preferably 80°C to 160°C, and yet more preferably 80°C to 150°C. When in this range, forming is carried out with little change in image color and excellent mold release.

### Hole making

In the present invention, it is preferable to subject a decorative sheet or a decorative sheet molded product to hole making, and more preferable to subject to hole making by means of trimming. The 'trimming' referred to here means the removal of an unwanted portion of a decorative sheet or a decorative sheet molded product after molding, and 'hole making by means of trimming' means removing an unwanted part by making a hole. From the viewpoint of productivity, the hole making is preferably carried out by punching.

Hole making may be carried out for a decorative sheet or may be carried out for a decorative sheet molded product, and is not particularly limited. Furthermore, hole making may be carried out subsequent to in-mold molding, which is described below.

### Process for producing in-mold molded article

The ink composition of the present invention is particularly suitable for in-mold molding.

In the present invention, a process for producing an in-mold molded article preferably comprises (step 1) a step of placing a decorative sheet or a decorative sheet molded product on an inner wall of a hollow part formed from a plurality of molds, and (step 2) a step of injecting a molten resin into the hollow part via a gate.

Examples of (step 1) include a step in which the decorative sheet of the present invention is placed within a mold and sandwiched. Specifically, the decorative sheet is fed into a mold for molding formed from a plurality of movable and fixed molds preferably with the image layer on the inside. In this process, a plurality of decorative sheets may be fed one by one, or a required portion of a long decorative sheet may be fed intermittently.

When a decorative sheet is placed within a mold, (i) it is placed by simply heating a mold and carrying out suction by evacuating the mold to give intimate contact, or (ii) it is placed by heating and softening from the image layer side using a heated platen, preliminarily molding the decorative sheet so as to follow the shape of the interior of the mold, and carrying out mold clamping so that there is intimate contact with an inner face of the mold. The heating temperature in (ii) is preferably at least around the glass transition temperature of a substrate film but less than the melting temperature (or melting point), and it is generally a temperature around the glass transition temperature. Around the glass transition temperature means a range of on the order of ±5°C of the glass transition temperature, and is generally on the order of 70°C to 130°C. In the case of (ii), for the purpose of putting the decorative sheet into intimate contact with the mold surface, when heating and softening the decorative sheet using a heated platen, suction by evacuating may be carried out.

In the present invention, a preliminarily molded decorative sheet molded product may be placed in a mold.

(Step 2) is an injection step in which a molten resin is injected into the cavity (hollow part) and cooled/solidified to thus laminate and integrate a resin molding and a decorative sheet. When the injection resin is a thermoplastic resin, it is put into a fluid state by heating and melting, and when the injection resin is a thermosetting resin, an uncured liquid composition is heated as appropriate and injected in a fluid state, and solidified by cooling. This enables the decorative sheet to integrate with and stick to the resin molding thus formed, thereby giving a decorative molded article. The heating temperature for the injection resin depends on the injection resin, but is preferably on the order of 180°C to 280°C.

### Injection resin

Any injection resin may be used in the decorative molded article as long as it is a thermoplastic resin or thermosetting resin (including a two-component curable resin) that can be injection-molded, and various resins may be used. Examples of such thermoplastic resin materials include a polystyrene-based resin, a polyolefin-based resin, an ABS resin (including a heat-resistant ABS resin), an AS resin, an AN resin, a polyphenylene oxide-based resin, a polycarbonate-based resin, a polyacetal-based resin, an acrylic-based resin, a polyethylene terephthalate-based resin, a polybutylene terephthalate-based resin, a polysulfone-based resin, and a polyphenylene sulfide-based resin. Examples of the thermosetting resin include a two-component reaction-curing type polyurethane-based resin and an epoxy-based resin. These resins may be used singly or as a mixture of two or more types.

In addition to the above steps, it is preferable to have a step of removing from the mold a molding having a resin molding integrated with a decorative sheet.

### EXAMPLE

The present invention is explained below more specifically by reference to Examples and Comparative Examples. However, the present invention should not be construed as being limited by these Examples.

'Parts' in the description below means 'parts by mass' and '%' means 'mass %' unless otherwise specified.

### Example 1

### 1. Preparation of cyan ink

Specific copolymer: compound example A-1 solution (compound example A-1: 35 mass%, 2-pyrrolidone: 35 mass%, ion-exchanged water: 30 mass%) 429 parts
Cyan pigment dispersion: C dispersion Projet Cyan APD 1000 (Fujifilm Imaging Colorants Limited): pigment concentration 14% 133 parts
High boiling point organic compound: 2-pyrrolidone (Wako Pure Chemical Industries, Ltd.) 50 parts
High boiling point organic compound: MPD (2-methyl-1,3,-propanediol: Wako Pure Chemical Industries, Ltd.) 100 parts
Surfactant: Capstone FS-34 (24% solution, DuPont) 17 parts

1,000 parts of a solution formed by adding 271 parts of ion-exchanged water to the above components was stirred using a mixer (L4R, Silverson) at room temperature and 5,000 rpm for 20 minutes, thus producing cyan ink C-1. The ink thus produced had a viscosity of 18 mPa·s and a surface tension of 23 mN/m.

Magenta ink M-1, yellow ink Y-1, black ink K-1, light cyan ink Lc-1, and light magenta ink Lm-1 were produced in the same manner to give the compositions shown in Table 2 below using commercial pigment dispersions. In Table 2 below, '-' denotes that the corresponding component was not contained.

Each crude ink composition thus obtained was charged into a plastic disposable syringe and filtered using a filter having a pore diameter of 5 µm and made of polyvinylidene fluoride (PVDF) (Millex-SV, Millipore, diameter 25 mm), thus giving a completed ink composition.

The magenta dispersion (M dispersion), black dispersion (K dispersion), and yellow dispersion (Y dispersion) used were as follows.
M dispersion: Projet Magenta APD 1000 magenta color pigment dispersion (Fujifilm Imaging Colorants Limited), pigment concentration 14%
K dispersion: Projet Black APD 1000 black color pigment dispersion (Fujifilm Imaging Colorants Limited), pigment concentration 14%
Y dispersion: Projet Yellow APD 1000 yellow color pigment dispersion (Fujifilm Imaging Colorants Limited), pigment concentration 16%

**Table 2**

| | C-1 | M-1 | Y-1 | K-1 | Lc-1 | Lm-1 |
|---|---|---|---|---|---|---|
| (a) A-1 solution | 429 | 429 | 429 | 429 | 429 | 429 |
| C dispersion | 133 | - | - | - | 27 | - |
| M dispersion | - | 333 | - | - | - | 67 |
| Y dispersion | - | - | 267 | - | - | - |
| K dispersion | - | - | - | 133 | - | - |
| 2-Pyrrolidone | 50 | 50 | 50 | 50 | 50 | 50 |
| MPD | 100 | 100 | 100 | 100 | 100 | 100 |
| FS-34 | 17 | 17 | 17 | 17 | 17 | 17 |
| Ion-exchanged water | 271 | 71 | 137 | 271 | 377 | 337 |
| Total amount (parts by mass) | 1,000 | 1,000 | 1,000 | 1,000 | 1,000 | 1,000 |
| Viscosity (mPa·sec) | 18 | 18 | 18 | 18 | 18 | 18 |
| Surface tension (mN/m) | 23 | 23 | 23 | 23 | 23 | 23 |

### Evaluation of ink set

The ink compositions C-1, M-1, Y-1, K-1, Lc-1, and Lm-1 of the present invention thus obtained were used to form a layered image using the printer below.

A platen heater having the same width as the printable width was disposed immediately beneath a head carriage moving part of an Acuity LED 1600 (Fujifilm Corporation). Furthermore, an exhaust hole for drying air was disposed above the head carriage.

A rigid table supplied with the Acuity LED 1600 was installed, and a germicidal lamp (SGN-1000N, ND lighting) was installed above the rigid table in an area 50 cm downstream from a printing section.

Printing was carried out under printing conditions of a liquid volume of 10 pL and an image density of 1,200 dpi × 1,200 dpi.

### Evaluation method

### 1. Heat stretchability evaluation

A 200% 4 color solid image was formed on a transparent substrate (polycarbonate, thickness 800 µm) as a resin sheet using the above experimental equipment. The proportions of the colors were C: 40%, M: 40%, Y: 40%, K: 80%. The image thus formed was cut to a size of 5 cm × 2 cm and stretched using a tensile machine under the temperature conditions below, and the stretching ratio was measured.
Machine used: Tensilon (Shimadzu Corporation)
Conditions: temperature 180°C, tensile speed 50 mm/min

The length at break was measured, and the stretching ratio was calculated. The stretching ratio is obtained from the equation below. Stretching ratio (%) = {(length at break - length before stretching)/length before stretching} x 100

For example, when an image breaks at 10 cm, the stretching ratio is calculated as being {(10cm-5cm)/5cm} x 100 = 100%.

The evaluation criteria for heat stretchability were as follows.
1: stretching ratio at least 200%
2: stretching ratio at least 150% but less than 200%
3: stretching ratio at least 100% but less than 150%
4: less than 100%

If a stretching ratio of 1 in the above evaluation is achieved, it can be applied to almost all thermal molding carried out in commercial applications.

### 2. Vacuum forming processability evaluation

A 200% 4 color solid image was formed on a transparent substrate (polycarbonate, thickness 800 µm) as a resin sheet using the above experimental equipment. The proportions of the colors were C: 40%, M: 40%, Y: 40%, K: 80%. The support on which the image had been formed was preheated to 200°C, this was suctioned onto a mold having an angle radius R of 2 at reduced pressure (0.11 × 10⁻² MPa) while stretching, and cooled under pressure to thus carry out molding.

A bent part was examined and evaluated using the evaluation criteria below. An average value was calculated from evaluation by 10 people.
1: no change in density could be perceived in bent part.
2: change in density could be perceived in bent part but no breakage.
3: partial breakage observed (broken part less than 50%).
4: mostly broken (broken part at least 50%).

When the evaluation was 2 or above, there were no problems in practice.

### 3. Evaluation of sticking to mold while vacuum forming

The degree of sticking to the mold when carrying out the above evaluation of vacuum forming was evaluated.
1: no sticking.
2: slight level of sticking observed (about 10 small spots on mold).
3: sticking to mold was observed, but mold and sample were pulled apart without applying force.
4: stuck; mold and sample could not be pulled apart without force.

### 4. Evaluation of resistance to ink flow

A 200% 4 color solid image was formed on a transparent substrate (polycarbonate, thickness 800 µm) as a resin sheet using the above experimental equipment. The proportions of the colors were C: 40%, M: 40%, Y: 40%, K: 80%.

The injection molding machine below was used, a decorative sheet was fixed to an inner wall of a hollow part of a 5.5 cm × 5.5 cm mold so that the image layer was on the inside, and an ABS (acrylonitrile/butadiene/styrene) resin at 220°C was injected via a gate toward the image face of the decorative sheet and molded. The molded article was subjected to evaluation of resistance to ink flow occurring during the process.

Ink flow is a phenomenon in which, during injection molding, an ink image film of a decorative sheet cannot follow the expansion/contraction of high temperature molten injection resin that has been injected; the ink image becomes missing, and the length of the missing portion is measured.

Injection molding equipment used: SG-50, Sumitomo Heavy Industries, Ltd.

The evaluation criteria for resistance to ink flow were as follows.
1: there was no ink flow at all.
2: less than 0.5 cm of ink flow occurred in the image layer at the injection part.
3: at least 0.5 cm but less than 5 cm of ink flow occurred in the image layer at the injection part.
4: at least 5 cm of ink flow occurred in the image layer at the injection part.

An evaluation of 1 or 2 was a level that gave no problems in practice.

### 5. Evaluation of sticking to mold while injection molding

The above evaluation of injection molding suitability was carried out while fixing a decorative sheet such that the image layer was on the cavity inner wall side, and the degree of sticking of the image to the mold was evaluated.
1: no sticking.
2: slight level of sticking observed (about 10 small spots on mold).
3: sticking to mold was observed, but mold and sample were pulled apart without applying force.
4: stuck; mold and sample could not be pulled apart without force.

### 6. Film strength evaluation

A 200% 4 color solid image was formed on a transparent substrate (polycarbonate, thickness 800 µm) as a resin sheet using the above experimental equipment. The proportions of the colors were C: 40%, M: 40%, Y: 40%, K: 80%. A sample formed by this method was subjected to a pencil hardness test.

The pencil hardness test is a test method in which a sample is scratched by pencils with various hardnesses. The evaluation scores below correspond to the hardness of the pencil that broke the film surface.
1: at least 6H
2: at least 4H but less than 6H
3: at least H but less than 4H
4: less than H

If the evaluation was 1 or 2, there were no problems in practice.

### 7. Color mingling (color bleed) evaluation

A yellow 100% solid image was printed using the above experimental equipment on both sides of a black line having a width of 4 dots, and color bleeding was evaluated. Color bleeding was judged from the raggedness of the black line. Raggedness was measured using a PIAS II manufactured by QEA.
1: there was no black contamination in the yellow printed area (raggedness less than 10 µm).
2: there was slight black contamination in the yellow printed area (raggedness at least 10 µm but less than 20 µm).
3: there was considerable black contamination in the yellow printed area (raggedness at least 20 µm).

If the evaluation was 1 or 2, there were no problems in practice.

### 8. Line quality evaluation

Black lines were printed on an image formed in the printing direction and a direction perpendicular to the printing direction, and the quality of the lines was evaluated. Raggedness was measured using a PIAS II made by QEA.
1: good quality line (raggedness less than 10 µm).
2: slight disturbance in the line (raggedness at least 10 µm but less than 15 µm).
3: considerable disturbance in the line (raggedness at least 15 µm but less than 25 µm).
4: line could not be formed (at least 25 µm).

If the evaluation was 1 or 2, there were no problems in practice.

### 9. Relief feel

A 200% 4 color solid image was formed on a transparent substrate (polycarbonate, thickness 800 µm) as a resin sheet using the above experimental equipment. The proportions of the colors were C: 40%, M: 40%, Y: 40%, K: 80%. The relief feel of this sample was evaluated.

The average value from evaluations by 10 people was taken.
1: there was no sense of standing out from the substrate face.
2: there was a slight sense of standing out from the substrate face.
3: there was a sense of standing out from the substrate face.
4: there was a strong sense of standing out from the substrate face.

### Evaluation results

An ink set employing C-1, M-1, Y-1, K-1, Lc-1, and Lm-1 was defined as ink set 1.

**Table 3**

| Ink set | Ink set 1 |
|---|---|
| Heat stretchability | 1 |
| Vacuum forming processability | 1 |
| Sticking to mold when vacuum forming | 1 |
| Ink flow resistance | 1 |
| Sticking to mold when injection molding | 1 |
| Film strength | 1 |
| Color mingling | 1 |
| Line quality | 1 |
| Relief feel | 1 |
| Notes | Present invention |

As is clear from Table 3, when the ink of the present invention was used, an excellent image quality was obtained in which heat stretchability, vacuum forming processability, film strength, color mingling, line quality, and relief feel were all excellent. Furthermore, an image having excellent ink flow resistance and suppressed sticking to a mold could be obtained.

### Comparative Example 1

Comparative inks C-cp, M-cp, Y-cp, K-cp, Lc-cp, and Lm-cp were prepared in the same manner as for C-1, M-1, Y-1, K-1, Lc-1, and Lm-1 except that compound A-1 used when preparing the inks of Example 1 was replaced by compound B-1.

The same evaluations as those of Example 1 were carried out in the same manner as in Example 1 by incorporating each ink in the equipment used in Example 1.

### Evaluation results

An ink set employing C-cp, M-cp, Y-cp, K-cp, Lc-cp, and Lm-cp was defined as an ink set cp.

**Table 4**

| Ink set | Ink set cp |
|---|---|
| Heat stretchability | 1 |
| Vacuum forming processability | 1 |
| Sticking to mold when vacuum forming | 3 |
| Ink flow resistance | 1 |
| Sticking to mold when injection molding | 3 |
| Film strength | 4 |
| Color mingling | 4 |
| Line quality | 3 |
| Relief feel | 1 |
| Notes | Comparative Example |

As is clear from Table 4, when aqueous inks of Comparative Example 1 were used, sufficient film strength could not be obtained and color mingling occurred. Furthermore, sticking to a mold occurred.

### Example 2

Evaluation was carried out in the same manner as in Example 1 except that the substrate was changed from polycarbonate (thickness 800 µm) to the substrates shown in Table 5.

**Table 5**

| Ink set | | Ink set 1 | Ink set 1 | Ink set 1 | Ink set 1 | Ink set 1 | Ink set 1 | Ink set 1 | Ink set 1 | Ink set 1 |
|---|---|---|---|---|---|---|---|---|---|---|
| Recording medium | Material | PC* | PC | PC | PC | PC | PC | PET | Acrylic resin | ABS resin |
| | Thickness (µm) | 50 | 300 | 500 | 1,000 | 5,000 | 10,000 | 800 | 800 | 800 |
| Heat stretchability | | 1 | 1 | 1 | 1 | 1 | 1 | 1 | 1 | 1 |
| Vacuum forming properties | | 2 | 1 | 1 | 1 | 1 | 1 | 1 | 1 | 1 |
| Sticking to mold when vacuum | | 2 | 1 | 1 | 1 | 1 | 1 | 1 | 1 | 1 |
| Ink flow resistance | | 2 | 1 | 1 | 1 | 1 | 1 | 1 | 1 | 1 |
| Sticking to mold when injection | | 2 | 1 | 1 | 1 | 1 | 1 | 1 | 1 | 1 |
| Film strength | | 2 | 1 | 1 | 1 | 1 | 1 | 1 | 1 | 1 |
| Color mingling | | 1 | 1 | 1 | 1 | 1 | 1 | 1 | 1 | 1 |
| Line quality | | 1 | 1 | 1 | 1 | 1 | 1 | 1 | 1 | 1 |
| Relief feel | | 1 | 1 | 1 | 1 | 1 | 1 | 1 | 1 | 1 |
| Notes | | Present invention | | | | | | | | |

| | | | | | | | | | | |
|---|---|---|---|---|---|---|---|---|---|---|
| *: PC means polycarbonate | | | | | | | | | | |

It was found that, accordance with use of the image ink set of the present invention, even when various other recording media suitable for heat stretching were used, the heat stretchability, vacuum forming processability, film strength, color mingling, line quality, and relief feel were excellent, sticking to a mold was suppressed and, furthermore, an image having excellent ink flow resistance could be formed.

### Example 3

Ink set 2, ink set 3, ink set 4, ink set 5, ink set 6, ink set 7, ink set 8, and ink set 9 were produced in the same manner as for ink set 1 except that compound example A-1 in the ink set used in Example 1 was replaced by compound example A-2, A-3, A-4, A-5, A-6, A-7, A-8, or A-9. Evaluations were carried out in the same manner as in Example 1 using the same equipment as that of Example 1. The results are shown in Table 6 below.

| | | |
|---|---|---|
| A-1 | 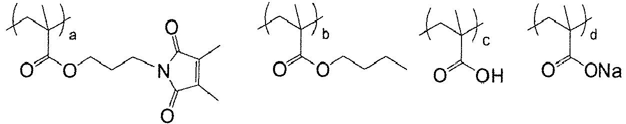 | a/b/c/d=50/34/9/7 |
| | | Mw=72,300 |
| | | SP=22.3 MPa^{1/2} |
| A-2 | 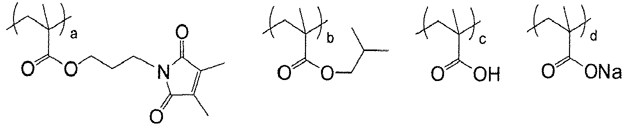 | a/b/c/d=40/48/6/6 |
| | | Mw=83,500 |
| | | SP=21.2 MPa^{1/2} |
| A-3 | 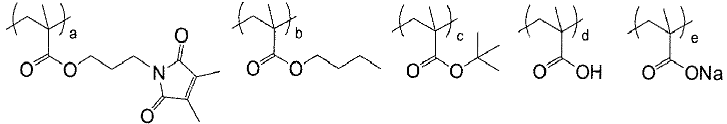 | a/b/c/d/e=50/10/34/9/7 |
| | | Mw=79,400 |
| | | SP=22.2 MPa^{1/2} |
| A-4 | 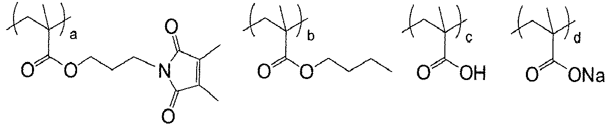 | a/b/c/d=60/24/9/7 |
| | | Mw=61,500 |
| | | SP=22.9 MPa^{1/2} |
| A-5 | 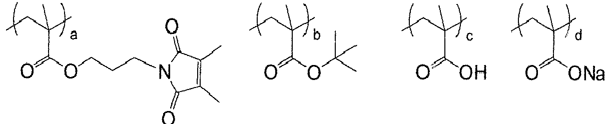 | a/b/c/d=40/44/9/7 |
| | | Mw=45,700 |
| | | SP=21.5 MPa^{1/2} |
| A-6 | 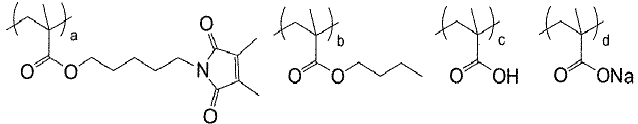 | a/b/c/d=60/24/9/7 |
| | | Mw=73,700 |
| | | SP=22.2 MPa^{1/2} |
| A-7 | 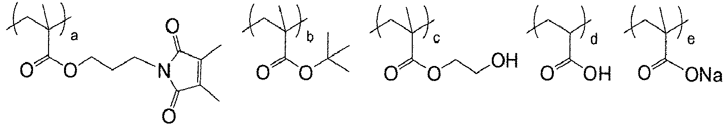 | a/b/c/d/e=40/40/8/6/6 |
| | | Mw=73,000 |
| | | SP=21.7 MPa^{1/2} |
| A-8 | 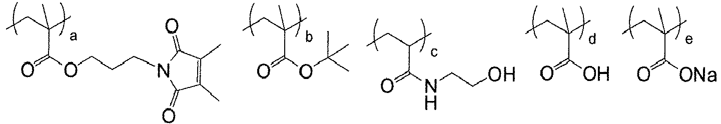 | a/b/c/d/e=40/40/8/6/6 |
| | | Mw=73,000 |
| | | SP=22.5 MPa^{1/2} |
| A-9 | 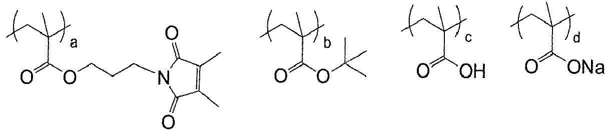 | a/b/c/d=30/56/7/7 |
| | | Mw=83,000 |
| | | SP=20.8 MPa^{1/2} |

**Table 6**

| Ink set | Ink set 2 | Ink set 3 | Ink set 4 | Ink set 5 | Ink set 6 | Ink set 7 | Ink set 8 | Ink set 9 |
|---|---|---|---|---|---|---|---|---|
| Component A | A-2 | A-3 | A-4 | A-5 | A-6 | A-7 | A-8 | A-9 |
| Heat stretchability | 1 | 1 | 1 | 1 | 1 | 1 | 1 | 1 |
| Vacuum forming properties | 1 | 1 | 1 | 1 | 1 | 1 | 1 | 1 |
| Sticking to mold when vacuum | 1 | 2 | 2 | 2 | 1 | 1 | 1 | 2 |
| Ink flow resistance | 1 | 1 | 2 | 2 | 1 | 1 | 1 | 2 |
| Sticking to mold when injection | 1 | 2 | 2 | 2 | 1 | 1 | 1 | 2 |
| Film strength | 1 | 2 | 2 | 2 | 1 | 1 | 1 | 2 |
| Color mingling | 1 | 1 | 1 | 2 | 1 | 1 | 1 | 1 |
| Line quality | 1 | 1 | 1 | 2 | 1 | 1 | 1 | 1 |
| Relief feel | 1 | 1 | 1 | 1 | 1 | 1 | 1 | 1 |
| Notes | Present invention | | | | | | | |

It was found that the same effects as those of Example 1 were obtained even when another compound of the present invention was used. Comparative Example 2 Evaluation was carried out in the exactly same manner as in Example 1 except that instead of the germicidal lamp a light-emitting diode (NC4U134 UV-LED, Nichia Corporation, wavelength 385 nm, illumination intensity 1, 500 mW/cm²) was used in the same constitution. The results are shown in Table 7.

**Table 7**

| Ink set | Ink set 1 |
|---|---|
| Heat stretchability | 1 |
| Vacuum forming processability | cannot evaluate* |
| Sticking to mold when vacuum forming | 4 |
| Ink flow resistance | 4 |
| Sticking to mold when injection molding | 3 |
| Film strength | 4 |
| Color mingling | 4 |
| Line quality | 4 |
| Relief feel | 1 |
| Notes | Comparative Example |

| | |
|---|---|
| *: cannot evaluate due to sticking to mold | |

When a light source having a different wavelength was used, polymerization did not progress sufficiently, and there was serious degradation in terms of vacuum forming processability, ink flow resistance, sticking to a mold, film strength, color mingling, and line quality.

## Claims

1. A process for producing a decorative sheet, the process comprising:
a discharge step of discharging an ink composition onto a recording medium;
a drying step of drying the ink composition above the recording medium by means of heat; and
a curing step of curing the ink composition above the recording medium by means of a light source having a peak wavelength of 200 nm to 300 nm,
the ink composition comprising (Component A) a polymer compound comprising a monomer unit (a-1) having a partial structure represented by Formula (1) below and a monomer unit (a-2) having a hydrophilic group, (Component B) water, and (Component C) a pigment 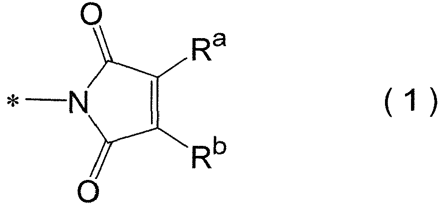
wherein in Formula (1), R^{a} and R^{b} mutually independently denote a hydrogen atom or an alkyl group having 1 to 4 carbon atoms, at least one of R^{a} and R^{b} denotes an alkyl group having 1 to 4 carbon atoms, and R^{a} and R^{b} may be bonded to each other to form a 4- to 6-membered alicyclic structure.

2. The process for producing a decorative sheet according to Claim 1, wherein the recording medium has a thickness of at least 300 µm but no greater than 10 mm.

3. The process for producing a decorative sheet according to Claim 1 or 2, wherein the light source is a germicidal lamp.

4. The process for producing a decorative sheet according to any one of Claims 1 to 3, wherein Component A further comprises a hydrophobic monomer unit (a-3) other than the monomer unit (a-1) having a partial structure represented by Formula (1) above.

5. The process for producing a decorative sheet according to Claim 4, wherein the hydrophobic monomer unit (a-3) is a monomer unit derived from an alkyl (meth)acrylate having 4 to 22 carbon atoms.

6. The process for producing a decorative sheet according to any one of Claims 1 to 5, wherein the monomer unit (a-1) having a partial structure represented by Formula (1) is a monomer unit represented by Formula (2) below 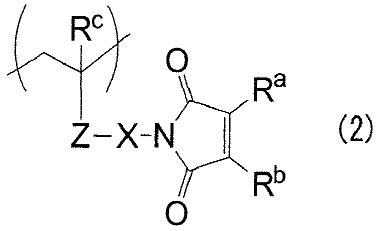 wherein in Formula (2), R^{a} and R^{b} mutually independently denote a hydrogen atom or an alkyl group having 1 to 4 carbon atoms, at least one of R^{a} and R^{b} denotes an alkyl group having 1 to 4 carbon atoms, R^{a} and R^{b} may be bonded to each other to form a 4- to 6-membered alicyclic structure, R^{c} denotes a hydrogen atom or a methyl group, Z denotes a single bond, -COO-**, or - CONR^{d}-**, R^{d} denotes a hydrogen atom or an alkyl group having 1 to 4 carbon atoms, ** denotes the position of bonding to X, and X denotes a divalent organic group.

7. The process for producing a decorative sheet according to any one of Claims 1 to 6, wherein the monomer unit (a-2) having a hydrophilic group is a monomer unit having at least one type of hydrophilic group selected from an alcoholic hydroxy group, an alkyl-substituted carbamoyl group, a carboxyl group, a sulfo group, and a salt thereof.

8. The process for producing a decorative sheet according to any one of Claims 1 to 7, wherein the monomer unit (a-2) having a hydrophilic group is a monomer unit having at least one type of hydrophilic group selected from a carboxyl group and a salt thereof.

9. The process for producing a decorative sheet according to any one of Claims 1 to 8, wherein Component A has a solubility parameter in an unneutralized state of 20.7 MPa^{1/2} to 23.0 MPa^{1/2}.

10. The process for producing a decorative sheet according to any one of Claims 1 to 9, wherein Component A has a solubility parameter in an unneutralized state of 21.5 MPa^{1/2} to 22.5 MPa^{1/2}.

11. A decorative sheet obtained by the production process according to any one of Claims 1 to 10.

12. A decorative sheet molded product obtained by subjecting the decorative sheet according to Claim 11 to vacuum forming, pressure forming, or vacuum/pressure forming.

13. The decorative sheet molded product according to Claim 12, wherein it is further subjected to hole making after the vacuum forming, pressure forming, or vacuum/pressure forming.

14. A process for producing an in-mold molded article, the process comprising:
a step of placing the decorative sheet according to Claim 11 or the decorative sheet molded product according to Claim 12 or 13 on an inner wall of a cavity part formed by means of a plurality of molds; and
a step of injecting a molten resin into the cavity part via a gate.

15. An in-mold molded article obtained by the production process according to Claim 14.
